(19) Europäisches Patentamt
European Patent Office
Office européen des brevets

(11) **EP 3 334 789 B1**

(12) **EUROPÄISCHE PATENTSCHRIFT**

(45) Veröffentlichungstag und Bekanntmachung des Hinweises auf die Patenterteilung:
**28.09.2022 Patentblatt 2022/39**

(21) Anmeldenummer: **16797530.9**

(22) Anmeldetag: **15.11.2016**

(51) Internationale Patentklassifikation (IPC):
$C09D\ 5/08$ ^(2006.01)   $C08L\ 23/22$ ^(2006.01)
$B32B\ 27/32$ ^(2006.01)   $C09D\ 123/22$ ^(2006.01)
$B32B\ 27/06$ ^(2006.01)   $B32B\ 7/12$ ^(2006.01)
$B32B\ 25/02$ ^(2006.01)   $B32B\ 25/08$ ^(2006.01)
$B32B\ 25/16$ ^(2006.01)   $B32B\ 25/18$ ^(2006.01)
$B32B\ 27/16$ ^(2006.01)   $B32B\ 27/18$ ^(2006.01)
$B32B\ 27/20$ ^(2006.01)   $B32B\ 27/26$ ^(2006.01)
$C08K\ 3/34$ ^(2006.01)

(52) Gemeinsame Patentklassifikation (CPC):
(C-Sets verfügbar)
**B32B 27/32; B32B 7/12; B32B 25/02; B32B 25/08;
B32B 25/16; B32B 25/18; B32B 27/06;
B32B 27/16; B32B 27/18; B32B 27/20;
B32B 27/26; C08K 3/34; C08L 23/22; C09D 5/08;
C09D 123/22;** (Forts.)

(86) Internationale Anmeldenummer:
**PCT/EP2016/077763**

(87) Internationale Veröffentlichungsnummer:
**WO 2017/085074 (26.05.2017 Gazette 2017/21)**

(54) **KORROSIONSSCHUTZZUSAMMENSETZUNG UMFASSEND MINDESTENS EINE ERSTE VERBINDUNG UND MINDESTENS EINE ZWEITE VERBINDUNG**

ANTI-CORROSION COMPOSITION COMPRISING AT LEAST A FIRST COMPOUND AND AT LEAST A SECOND COMPOUND

COMPOSITION ANTICORROSION COMPRENANT AU MOINS UN PREMIER COMPOSÉ ET AU MOINS UN SECOND COMPOSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.11.2015 DE 102015119790**

(43) Veröffentlichungstag der Anmeldung:
**20.06.2018 Patentblatt 2018/25**

(73) Patentinhaber: **DENSO-Holding GmbH & Co.
51371 Leverkusen (DE)**

(72) Erfinder:
• **KAISER, Thomas Markus
52459 Inden (DE)**
• **GRYSHCHUK, Oleg
51381 Leverkusen (DE)**

(74) Vertreter: **Geskes, Christoph
Geskes Patent- und Rechtsanwälte
Gustav-Heinemann-Ufer 74b
50968 Köln (DE)**

(56) Entgegenhaltungen:
**EP-A2- 0 244 738      EP-A2- 1 100 093
EP-A2- 2 210 734      WO-A1-2016/165791
US-A1- 2004 015 267**

• T. G FOX ET AL: "Intrinsic Viscosity-Temperature Relationships for Polyisobutylene in Various Solvents 1", JOURNAL OF THE AMERICAN CHEMICAL SOCIETY, Bd. 73, Nr. 5, 1. Mai 1951 (1951-05-01), Seiten 1909-1915, XP055334255, US ISSN: 0002-7863, DOI: 10.1021/ja01149a003

(52) Gemeinsame Patentklassifikation (CPC): (Forts.)
B32B 2250/24; B32B 2250/40; B32B 2262/00;
B32B 2262/10; B32B 2264/10; B32B 2264/102;
B32B 2270/00; B32B 2307/50; B32B 2307/70;
B32B 2307/714; B32B 2307/734; B32B 2597/00;
C08L 2203/18; C08L 2205/02

C-Sets
**C08L 23/22, C08L 23/22, C08K 3/34;
C08L 23/22, C08L 23/22, C08L 23/22, C08K 3/34;
C09D 123/22, C08L 23/22, C08K 3/34;
C09D 123/22, C08L 23/22, C08L 23/22, C08K 3/34**

**Beschreibung**

Die vorliegende Erfindung betrifft eine Korrosionsschutzzusammensetzung umfassend mindestens eine erste Verbindung und mindestens eine zweite Verbindung als auch deren Verwendung zum Schutz von Rohren und Rohre umfassenden Anlagen sowie sonstigen Anlagen und Einbauten als auch ein Verfahren zur Erzielung eines Korrosionsschutzes und ein mindestens einschichtiges Wickelband, umfassend die erfindungsgemäße Zusammensetzung.

Korrosionsschutzzusammensetzungen und Korrosionsschutzsysteme beispielsweise für Rohranlagen wie Pipelines, aber auch für sonstige technische Anlagen, sind vielfältig aus dem Stand der Technik bekannt. So offenbart die EP 0 421 607 A1 ein Bandumwicklungssystem zum Schutz von rohrförmigen Gegenständen, das eine Innenumwicklung, die die Oberfläche des zu schützenden Gegenstandes bedeckt, und eine über die Innenwicklung angeordnete Außenumwicklung umfasst, wobei die Innenumwicklung eine stoßfeste Schicht mit einer Klebeschicht auf ihrer inneren Oberfläche und eine Schicht auf ihrer äußeren Oberfläche umfasst, und wobei die Außenumwicklung eine Trägerschicht mit einer Schicht auf mindestens einer ihrer Oberflächen umfasst, wobei die Innenumwicklung und die Außenumwicklung warmschmelzbares Material einschließen, wobei das Bandumwicklungssystem auf dem rohrförmigen Gegenstand so aufgebracht wird, dass bei Erwärmen und Abkühlen die Außenumwicklung mit der Innenumwicklung warmverschmolzen und dadurch eine vollständig geschlossene schützende Beschichtung gebildet wird. Durch das dort offenbarte Bandumwicklungssystem soll die Aufgabe gelöst werden, eine Verbesserung gegenüber zerstörerischen äußeren Kräften herbeizuführen, indem ein kontinuierliches, nahtloses, schützendes Bandumwicklungssystem zur Verfügung gestellt wird. Eine der Klebstoffschichten kann beispielsweise aus Butylkautschuk hergestellt sein. Als warmschmelzbares Material werden beispielsweise Etylenvinylacetat, Etylenmethylacrylat und Polyethylen niedriger Dichte eingesetzt. Problematisch an dem in EP 0 421 607 A1 offenbarten Bandumwicklungssystem ist gerade bei höheren Temperaturen umhüllter Rohrsysteme und technischer Anlagen gleich welcher Art der Kontakt zwischen z. B. der Außenseite eines Pipeline-Rohres mit der Klebstoffschicht, beispielsweise aus Butylkautschuk, die sich von der Außenseite des Pipeline-Rohres lösen kann.

Entsprechende Probleme ergeben sich auch dann, wenn Korrosionsschutzzusammensetzungen nicht in Bandform, sondern beispielsweise in Form einer Spachtelmasse eingesetzt werden. Auch hier ist gerade bei hohen Temperaturen oftmals eine nicht hinreichende Haftung der Masse auf beispielsweise Stahloberflächen gegeben. Die Haftung von Massen oder Bändern wird insbesondere durch die Schälfestigkeit, auch Schälwiderstand genannt, beschrieben, und ist gemäß DIN 12068 in der Version 1999 - 03 bestimmbar. Jedoch nicht nur bei hohen Temperaturen, sondern oftmals auch schon bei Raumtemperaturen (20°C oder 23°C) ist die vorstehend genannte Haftung oftmals verbesserungswürdig. Eine verbesserte Haftung wird im Stand der Technik daher oftmals durch Einsatz eines lösemittelhaltigen Primers/Haftvermittlers erzeugt.

EP 2 210 734 A2 offenbart eine klebrige Zusammensetzung umfassend ein Polyolefinmischung, wobei die Polyolefinmischung 50 Gew.-% bis 100 Gew.-% eines Polyisobutlyens und 0 Gew.-% bis 50 Gew.-% eines oder mehrerer Olefinpolymerer umfasst, jeweils bezogen auf die Gesamtmenge der Zusammensetzung.

Es ist daher Aufgabe der vorliegenden Erfindung, eine Korrosionsschutzzusammensetzung zur Verfügung zu stellen, welche eine verbesserte Haftung auf Oberflächen gleich welcher Art, beispielsweise Rohren oder Rohre umfassenden Anlagen einschließlich Pipelines, sowie sonstigen Einbauten zur Verfügung stellt, und dabei vorzugsweise weiterhin auch eine verbesserte mechanische Belastbarkeit aufweist.

Diese Aufgabe wird gelöst durch eine Korrosionsschutzzusammensetzung umfassend mindestens eine erste Verbindung ausgewählt aus einer Gruppe bestehend aus einem ersten Polyisobutylen mit einer mittleren relativen Molmasse $\overline{M}_V$ in einem Bereich von 27.000 g/mol, bevorzugt von etwa 30.000 g/mol, bis 110.000 g/mol, bevorzugt von etwa 100.000 g/mol, und einem Staudinger-Index $J_0$ in einem Bereich von 13,5 cm$^3$/g bis 77 cm$^3$/g und/oder einem ersten, depolymerisierten Butylkautschuk mit einer scheinbaren Viskosität nach Brookfield bei 66°C gemäß DIN EN ISO 2555 : 2000-01 in einem Bereich von 360.000 mPa · s bis 2.200.000 mPa · s und einem mittleren Molekulargewicht $M_W$ in einem Bereich von 18.000 bis 66.000, und mindestens eine zweite Verbindung, ausgewählt aus einer Gruppe bestehend aus einem zweiten Polyisobutylen mit einer mittleren relativen Molmasse $\overline{M}_V$ in einem Bereich von 810.000 g/mol, bevorzugt von etwa 950.000 g/mol, bis 7.150.000 g/mol, bevorzugt bis etwa 6.500.000 g/mol, und einen Staudinger-Index $J_0$ in einem Bereich von etwa 216 cm$^3$/g bis 990 cm$^3$/g und/oder einem zweiten, teilweise vernetzten Butylkautschuk mit einer Mooney-Viskosität ML(1+3) bei 127°C in einem Bereich von 58,5 MU bis 110 MU gemäß ISO 289 : 2005, wobei die Korrosionsschutzzusammensetzung mindestens ein erstes oder mindestens ein zweites Polyisobutylen als auch mindestens einen ersten oder mindestens einen zweiten Butylkautschuk umfasst, wobei der Staudinger-Index $J_0$ wie nachfolgend angegeben bestimmt ist.

Der Staudinger-Index $J_0$ wurde früher auch als Intrinsische Viskosität bezeichnet. Er wird berechnet aus der Flusszeit bei 20°C durch eine Kapilare eines Ubbelohde-Viskosimeters nach der folgenden Formel (Schulz-Blaschke-Gleichung):

$$J_0 = \eta_{sp}/c \; (1+0{,}31^{\times}\eta_{sp}) \; cm^3/g$$

wobei

$$\eta_{sp} = \frac{t}{t_0} - 1 \; \text{(spezifische Viskosität)},$$

wobei t die Fließzeit der Lösung mit einer Hagenbach-Couette Korrektur, $t_0$ die Fließzeit des Lösemittels mit Hagenbach-Couette Korrektur und c die Konzentration der Lösung in g/cm$^3$ angibt. Die mittlere relative Molmasse $\overline{M}_v$ (Viskositätsmittel) berechnet sich aus der folgenden Formel:

$$\sqrt[0{,}65]{\frac{J_0 \times 10^2}{3{,}06}}$$

Polyisobutylene im Sinne der vorliegenden Erfindung werden bevorzugt über eine kationische Polymerisation von Isobuten (2-Methylpropen) synthetisiert in einem Temperaturbereich zwischen etwa -100°C und etwa 0°C. Die Temperatur beeinflusst dabei die Molmasse des solchermaßen erzeugten Polyisobutens, je niedriger die Temperatur ist, desto höher ist die Molmasse desselben. Üblicherweise werden Bortrifluorit oder Aluminiumtrichlorid in wässriger oder alkoholischer Lösung als Initiatoren eingesetzt.

Das mindestens eine erste Polyisobutylen weist vorteilhafterweise einen Staudinger-Index $J_0$ in einem Bereich von etwa 22 cm$^3$/g bis etwa 65 cm$^3$/g auf, und noch weiter bevorzugt einen Staudinger-Index $J_0$ in einem Bereich von etwa 25 cm$^3$/g bis etwa 45 cm$^3$/g. Bevorzugt weist das mindestens eine erste Polyisobutylen eine mittlere relative Molmasse $\overline{M}_v$ (Viskositätsmittel) in einem Bereich von etwa 35.000 g/mol bis etwa 95.000 g/mol, und weiter bevorzugt eine mittlere relative Molmasse $\overline{M}_v$ in einem Bereich von etwa 30.000 g/mol, bevorzugt von etwa 37.000 g/mol, bis etwa 75.000 g/mol, bevorzugt bis etwa 70.000 g/mol, auf. Das mindestens eine erste Polyisobutylen ist vorteilhafterweise in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der Zusammensetzung, von dieser umfasst.

Das mindestens eine zweite Polyisobutylen weist bevorzugt einen Staudinger-Index $J_0$ in einem Bereich von etwa 400 cm$^3$/g bis etwa 800 cm$^3$/g, und noch weiter bevorzugt einen Staudinger-Index $J_0$ in einem Bereich von etwa 500 cm$^3$/g bis etwa 700 cm$^3$/g, auf. Bevorzugt weist das mindestens eine zweite Polyisobutylen eine mittlere relative Molmasse $\overline{M}_v$ in einem Bereich von etwa 1.500.000 g/mol, bevorzugt von etwa 2.000.000 g/mol, bis etwa 6.000.000 g/mol, bevorzugt bis etwa 5.000.000 g/mol, weiter bevorzugt in einem Bereich von etwa 3.000.000 g/mol bis etwa 5.000.000 g/mol, bevorzugt bis etwa 4.800.000 g/mol, auf.

Unter dem Begriff Butylkautschuk werden im Sinne der vorliegenden Erfindung insbesondere verstanden Co- oder Block-Co-Polymere von Isobuten mit etwa 0,5 Gew.-% bis etwa 5 Gew.-% Isopren, bezogen auf die Gesamtmenge des Butylkautschuks, die insbesondere durch kationische Polymersation hergestellt werden. Über das eingesetzte Isopren und die in diesem vorhandenen Kohlenstoff-Kohlenstoff-Doppelbindungen, die als funktionelle Gruppen wirken, kann eine Vernetzungsreaktion initiiert werden. Im Sinne der vorliegenden Erfindung fallen unter den Begriff Butylkautschuk insbesondere auch halogenierte Butylkautschuke, insbesondere solche, die chloriert bzw. bromiert sind (Chlorbutylkautschuk bzw. Brombutylkautschuk). Es können auch Gemische mehrerer Butylkautschuke eingesetzt werden, dass heißt mehr als mindestens ein Butylkautschuk.

Der mindestens eine erste, depolymerisierte Butylkautschuk wird durch Depolymersation von Butylkautschuken (IIR) erhalten. Der mindestens eine erste Butylkautschuk weist ein geringes Molekulargewicht auf. Er liegt besonders bevorzugt bei 23°C in flüssiger Form vor. Dem gegenüber ist der mindestens eine zweite Butylkautschuk nicht depolymerisiert und weist ein im Vergleich zum ersten Butylkautschuk hohes Molekulargewicht auf. Der mindestens eine zweite Butylkautschuk liegt vorteilsweise bei 23°C in fester Form vor.

Der mindestens eine erste depolymerisierte Butylkautschuk weist bevorzugt eine scheinbare Viskosität nach Brookfield gemäß DIN EN ISO 2555 : 2000-01 bei 66°C in einem Bereich von etwa 600.000 mPa · s bis etwa 1.600.000 mPa · s, weiter bevorzugt in einem Bereich von etwa 700.000 mPa · s bis etwa 1.500.000 mPa · s, auf. Bevorzugt weist der mindestens eine erste, depolymerisierte Butylkautschuk ein mittleres Molekulargewicht $M_w$ in einem Bereich von etwa 20.000 bis etwa 60.000 auf. Der mindestens eine erste depolymerisierte Butylkautschuk weist vorteilhafterweise die Eigenschaft auf, bereits bei niedrigen Temperaturen, insbesondere bei Raumtemperaturen von beispielsweise 20°C oder 23°C, oder aber auch bei leicht erhöhten Temperaturen von beispielsweise 40°C bis 50°C, eine Vernetzungsreaktion aufgrund der in diesem vorhandenen ungesättigten Kohlenstoff-Kohlenstoff-Doppelbindungen einzugehen.

Der mindestens eine zweite, teilweise vernetzte (im Folgenden auch als teilweise vorvernetzt bezeichnet) Butylkautschuk, der damit einen geringeren Anteil ungesättigter Bindungen aufweist als übliche Butylkautschuke, weist bevorzugt eine Mooney-Viskosität ML(1+3) bei 127°C in einem Bereich von etwa 70 MU bis etwa 93 MU, weiter bevorzugt in einem Bereich von etwa 78 MU bis etwa 91 MU, gemessen gemäß ISO 289 : 2005 oder gemäß ASTM 1604-04, auf. Die spezifische Dichte des mindestens einen zweiten, teilweise vernetzten Butylkautschuks liegt vorteilhafterweise bei einer Temperatur von 25°C gemäß ASTM D1875 in der Version von 2003 in einem Bereich von etwa 0,5 bis etwa 1,1, bevorzugt in einem Bereich von etwa 0,9 bis etwa 0,98.

Bevorzugt ist die erste Verbindung von der erfindungsgemäßen Zusammensetzung in einer Menge in einem Bereich von 18 Gew.-% bis 72,6 Gew.-%, bevorzugt in einer Menge in einem Bereich von etwa 28 Gew.-% bis etwa 60 Gew.-%, weiter bevorzugt in einer Menge in einem Bereich von etwa 33 Gew.-% bis etwa 50 Gew.-%, jeweils bezogen auf die Gesamtmenge der Zusammensetzung, von dieser umfasst. Besonders bevorzugt ist die erste Verbindung ausgewählt aus einer Gruppe umfassend ausschließlich mindestens ein erstes Polyisobutylen, bevorzugt ein erstes Polyisobutylen. In einer alternativen Ausführungsform ist die erste Verbindung ausgewählt aus einer Gruppe umfassend ausschließlich mindestens einen ersten, depolymerisierten Butylkautschuk, bevorzugt genau einen ersten, depolymerisierten Butylkautschuk. In einer weiteren alternativen Ausgestaltung der vorliegenden Erfindung ist die erste Verbindung eine Mischung mindestens eines ersten Polyisobutylens und mindestens eines ersten, depolymerisierten Butylkautschuks, bevorzugt eine Mischung aus genau einem ersten Polyisobutylen und genau einem ersten depolymerisierten Butylkautschuk. Soweit eine Mischung mindestens eines ersten Polyisobutylens und mindestens eines ersten, depolymerisierten Butylkautschuks vorliegt, sind bevorzugt das mindestens eine erste Polyisobutylen und der mindestens eine erste, depolymerisiert Butylkautschuk in einer in etwa gleichen Menge in der Zusammensetzung vorhanden. Es kann jedoch auch vorgesehen sein, dass eine größere Menge des mindestens einen ersten Polyisobutylens im Vergleich zu dem mindestens einen ersten, depolymerisierten Butylkautschuk in dieser vorliegt, und umgekehrt.

Besonders bevorzugt ist die zweite Verbindung in einer Menge in einem Bereich von 0,9 Gew.-% bis 22 Gew.-%, weiter bevorzugt in einer Menge in einem Bereich von etwa 2 Gew.-% bis etwa 10 Gew.-%, noch weiter bevorzugt in einer Menge in einem Bereich von etwa 3 Gew.-% bis etwa 8 Gew.-%, jeweils bezogen auf die Gesamtmenge der Zusammensetzung, umfasst. Die zweite Verbindung ist in einer ersten Ausführungsform vorzugsweise ausgewählt aus einer Gruppe umfassend ausschließlich mindestens ein zweites Polyisobutylen, bevorzugt genau ein zweites Polyisobutylen. In einer alternativen Ausführungsform ist die Verbindung ausgewählt aus einer Gruppe umfassend ausschließlich mindestens einen zweiten, teilweise vernetzten Butylkautschuk, bevorzugt genau einen zweiten, teilweise vernetzten Butylkautschuk. In einer weiteren alternativen Ausführungsform ist die zweite Verbindung ausgewählt aus einer Mischung mindestens eines zweiten Polyisobutylens und mindestens eines zweiten, teilweise vernetzten Butylkautschuks, bevorzugt eine Mischung aus genau einem zweiten Polyisobutylen und einem zweiten, teilweise vernetzten Butlykautschuk. Soweit eine Mischung aus mindestens einem zweiten Polyisobutylen und mindestens einem zweiten, teilweise vernetzten Butylkautschuk vorgesehen ist, können in einer bevorzugten Ausführungsform das mindestens eine zweite Polyisobutylen und der mindestens eine zweite, teilweise vernetzte Butylkautschuk in einer in etwa gleichen Menge in der Zusammensetzung vorliegen. In einer weiteren Ausführungsform können jedoch auch unterschiedliche Mengen des mindestens einen zweiten Polyisobutylens und des mindestens einen zweiten, teilweise vernetzten Butylkautschuks in dieser vorgesehen sein.

Das Verhältnis der mindestens einen ersten Verbindung zu der mindestens einen zweiten Verbindung in der erfindungsgemäßen Zusammensetzung liegt vorteilhafterweise in einem Bereich von etwa 15 : 1 bis etwa 1 : 1, weiter bevorzugt in einem Bereich von etwa 13 : 1 bis etwa 5 : 1.

Je höher der Anteil der mindestens einen zweiten Verbindung in der erfindungsmäßen Zusammensetzung ist, desto höher ist grundsätzlich die Schälfestigkeit/der Schälwiderstand. Dies wird jedoch mit dem Nachteil erkauft, das bei hohen Mengen der mindestens einen zweiten Verbindung in einem Schälversuch ein eher adhäsives und damit nachteiliges Trennbild erhalten wird.

Die erfindungsgemäße Zusammensetzung weist vorteilhafterweise gute Werte für die Schälfestigkeit und damit eine gute Haftung der erfindungsgemäßen Korrosionsschutzzusammensetzung auf beispielsweise Stahloberflächen von Rohren oder ähnlichem bei gleichzeitig gewünschtem kohäsivem Trennbild auf. Im Unterschied zu einer kohäsiven Trennung wäre nachteilig eine adhäsive Trennung bzw. ein adhäsives Trennbild, welches zwischen einer Korrosionsschutzzusammensetzung und dem diesem bedeckenden Material beispielsweise einem Stahlrohr, erhalten werden würde. Bei einer kohäsiven Trennung bzw. kohäsiven Trennbild erfolgt ein Verbleib der Korrosionsschutzzusammensetzung bei Abhebung derselben von dem zu schützenden Produkt zumindest in Teilen auf dem abgedeckten Produkt, beispielsweise einem Stahlrohr. Die Vorsehung einer Mischung mindestens einer ersten Verbindung und mindestens einer zweiten Verbindung führt darüber hinaus vorteilhafterweise dazu, dass eine Korrosionsschutzzusammensetzung erhalten wird, welche nicht nur hinreichend fließfähig ist, so dass diese in Form einer Spachtelmasse eingesetzt werden kann, sondern sogleich auch beispielsweise in Bandform oder Mattenform, beispielsweise in Wickelbändern, eingesetzt werden kann.

Die erfindungsgemäße Korrosionsschutzzusammensetzung weist neben der mindestens einen ersten und der mindestens einen zweiten Verbindung vorteilhafterweise keinen Weichmacher, insbesondere keinen Weichmacher in Form eines Prozessöles auf. Der Einsatz eines solchen Weichmachers kann erspart bleiben, da die mindestens eine erste Verbindung aufgrund des relativ geringen Molekulargewichtes desselben in einer eher flüssigen, nicht allzu viskosen Form zur Verfügung gestellt ist, sodass der Zusatz eines Weichmachers nicht mehr von Nöten ist. Gleichwohl kann im Sinne der vorliegenden Erfindung vorgesehen sein, dass ein Weichmacher, insbesondere in Form eines Prozessöles, eingesetzt wird. Soweit vorgesehen, kann die erfindungsgemäße Korrosionsschutzzusammensetzung als Weichmacher mindestens ein Prozessöl umfassen, bevorzugt in einer Menge in einem Bereich von etwa 0,5 Gew.-% bis etwa 10 Gew.-%, weiter bevorzugt in einer Menge in einem Bereich von etwa 2 Gew.-% bis etwa 8 Gew.-%, jeweils bezogen auf die Gesamtmenge der erfindungsgemäßen Zusammensetzung.

Die erfindungsgemäße Korrosionsschutzzusammensetzung weist den Vorteil auf, dass diese bereits bei Raumtemperaturen, beispielsweise 23 °C, gute Werte für die Schälfestigkeit/Schälwiderstand gemäß DIN 10268 in der Version 1999-03 aufweist, insbesondere Werte, welche größer als etwa 5 N/cm, noch weiter bevorzugt größer als etwa 10 N/cm, sind, wobei bevorzugt die Werte für die Schälfestigkeit/der Schälwiderstand gemäß DIN EN 10268 in der Version 1999-03 in einem Bereich zwischen etwa 6 N/cm und etwa 20 N/cm, weiter bevorzugt zwischen etwa 10 N/cm und etwa 40 N/cm, liegen. Die vorgenannten Werte beziehen sich auf die mechanische Schälprüfung gemäß der DIN EN 10268 in der Version 1999-03, und zwar bezogen auf sowohl eine Aufbringung der Korrosionsschutzzusammensetzung auf eine Werksumhüllung eines beispielsweise Rohres wie einer Gasleitung oder Pipeline, als auch bezogen auf eine nicht umhüllte Rohraußenfläche, beispielsweise eines Stahlrohres.

Die erfindungsgemäße Korrosionsschutzzusammensetzung weist aufgrund der guten Werte für die Schälfestigkeit bzw. den Schälwiderstand eine gute mechanische Belastbarkeit auf. Dies gilt auch bei höheren Temperaturen. Auch weist die erfindungsgemäße Korrosionsschutzzusammensetzung vorteilhafterweise eine gute Haftung auf Untergründen gleich welcher Art auf, insbesondere auf Rohren wie Pipelines oder Rohren aufweisenden Anlagen, gleich ob diese bereits mit einer Werksumhüllung versehen sind oder aber eine solche nicht aufweisen, im letzteren Fall also eine metallische Oberfläche, insbesondere eine Stahloberfläche zur Aufbringung der Korrosionsschutzzusammensetzung, zur Verfügung stellen. Besonders vorteilhafterweise ist es möglich, dass die erfindungsgemäße Korrosionsschutzzusammensetzung ohne vorherige Aufbringung eines Primers/Haftvermittlers aufgebracht werden kann, wobei der arbeits- und zeitaufwendige Schritt der Vorbehandlung mit diesen Produkten entfällt. Gleichwohl ist es im Sinne der vorliegenden Erfindung nicht ausgeschlossen, dass ein Primer oder Haftvermittler eingesetzt wird. Geeignete Produkte bestehen beispielsweise aus Butylkautschuk in Mischungen mit Kohlenwasserstoffharzen in Benzin als Lösemittel, und sind beispielsweise erhältlich unter der Bezeichnung DENSOLEN Primer, DENSO GmbH, Leverkusen, Deutschland.

Bevorzugt umfasst die erfindungsgemäße Korrosionsschutzzusammensetzung mindestens eine dritte Verbindung, ausgewählt aus einer Gruppe umfassend mindestens ein drittes Polyisobutylen mit einem Staudinger-Index $J_0$ in einem Bereich von 67,5 cm$^3$/g bis 258,5 cm$^3$/g und mit einer mittleren relativen Molmasse $\overline{M}_v$ in einem Bereich von 135.000 g/mol, bevorzugt von etwa 160.000 g/mol, bis 935.000 g/mol, bevorzugt bis etwa 850.000 g/mol, und/oder mindestens einen dritten Butylkautschuk mit einem mittleren Molekulargewicht $M_w$ in einem Bereich von 135.000 bis 2.200.000 und einer Mooney-Viskosität ML(1+8) bei 125°C in einem Bereich von 18 MU bis 68,2 MU, gemessen gemäß ISO 289 : 2005.

Das mindestens eine dritte Polyisobutylen weist bevorzugt einen Staudinger-Index $J_0$ in einem Bereich von etwa 106 cm$^3$/g bis etwa 160 cm$^3$/g auf. Bevorzugt weist das mindestens eine dritte Polyisobutylen eine mittlere relative Molmasse $\overline{M}_v$ in einem Bereich von etwa 250.000 g/mol bis etwa 600.000 g/mol, bevorzugt bis etwa 550.000 g/mol, auf. Bevorzugt ist das mindestens eine dritte Polyisobutylen in einer Menge in einem Bereich von etwa 10 Gew.-% bis etwa 35 Gew.-%, weiter bevorzugt in einer Menge in einem Bereich von etwa 13 Gew.-% bis etwa 28 Gew.-%, jeweils bezogen auf die Gesamtmenge der Zusammensetzung, von dieser umfasst.

Das Verhältnis des mindestens einen ersten Polyisobutylens, also der Gesamtmenge des eingesetzten ersten Polyisobutylens, auch wenn eine Mischung vorliegt, zu dem mindestens einen zweiten Polyisobutylen, das heißt der Gesamtmenge des zweiten Polyisobutylens, auch wenn dies in einer Mischung vorliegt, liegt vorteilhafterweise in einem Bereich von etwa 2,5 : 1 bis etwa 1 : 2,5, weiter bevorzugt in einem Bereich von etwa 2,2 : 1 bis etwa 1 : 1. Die erfindungsgemäß eingesetzten Polyisobutylene, also sowohl das erste, das zweite, als auch das dritte Polyisobutylen, weisen vorteilhafterweise eine Glasübergangstemperatur $T_g$, (kalorimetrisch durch DSC gemessen) von weniger als -50°C, weiter bevorzugt weniger als - 58°C, auf. Besonders bevorzugt liegt die Glasübergangstemperatur des mindestens einen ersten, des mindestens einen zweiten und des mindestens einen dritten Polyisobutylens in einem Bereich von etwa -55°C bis etwa -68°C, weiter bevorzugt in einem Bereich von etwa -58°C bis etwa -66°C. Das höher molekulare, mindestens eine zweite Polyisobutylen, kann damit noch als eine hochviskose Flüssigkeit angesprochen werden, und weist eine gewisse Kriechneigung auf.

Der mindestens eine dritte Butylkautschuk weist vorteilhafterweise ein mittleres Molekulargewicht $M_w$ in einem Bereich von etwa 200.000 bis etwa 1.800.000, weiter bevorzugt in einem Bereich von etwa 250.000 bis etwa 600.000, auf. Bevorzugt weist der mindestens eine dritte Butylkautschuk eine Mooney-Viskosität ML(1+8) bei 125°C in einem Bereich von etwa 30 MU bis etwa 60 MU, weiter bevorzugt in einem Bereich von etwa 40 MU bis etwa 59 MU, noch weiter bevorzugt in einem Bereich von etwa 40 MU bis etwa 55 MU, gemessen gemäß ISO 289 : 2005, auf. Der mindestens eine dritte Butylkautschuk ist vorteilhafterweise in einer Menge in einem Bereich von etwa 10 Gew.-% bis etwa 50 Gew.-%, weiter bevorzugt in einer Menge in einem Bereich von etwa 15 Gew.-% bis etwa 35 Gew.-%, jeweils bezogen auf die Gesamtmenge der Zusammensetzung, von der Zusammensetzung umfasst.

Vorteilhafterweise weist der mindestens eine dritte Butylkautschuk Werte für die Ungesättigtheit in einem Bereich von etwa 1 Mol-% bis etwa 3 Mol-%, weiter bevorzugt in einem Bereich von etwa 1,3 Mol-% bis etwa 2,5 Mol-%, auf. Dies bedeutet, dass bevorzugt etwa 1 Mol-% bis etwa 3 Mol-%, weiter bevorzugt etwa 1,3 Mol-% bis etwa 2,5 Mol-% ungesättigte Bindungen, dass heißt Kohlenstoff-Kohlenstoff-Doppelbindungen, als funktionelle Gruppen in einem mindestens einen dritten Butylkautschuk vorliegen. Besonders bevorzugt ist der mindestens eine dritte Butylkautschuk hergestellt durch eine Co-Polymerisation von Isobuten und Isopren in Methylchlorid als Lösemittel. Die Ungesättigtheit (der Grad der Unsättigung) des mindestens einen dritten Butylkautschuks kann auch bei etwa 1,5 Mol-%, insbesondere bei 1,5±0,5 Mol-%, liegen.

In einer besonders bevorzugten Ausführungsform ist die mindestens eine dritte Verbindung in einer Menge in einem Bereich von 9 Gew.-% bis 44 Gew.-%, bevorzugt in einem Bereich von etwa 15 Gew.-% bis etwa 35 Gew.-%, weiter bevorzugt in einer Menge in einem Bereich von etwa 16 Gew.-% bis etwa 30 Gew.-%, jeweils bezogen auf die Gesamtmenge der Zusammensetzung, von der Zusammensetzung umfasst. Die mindestens eine dritte Verbindung kann in einer Ausführungsform ausgewählt sein ausschließlich aus einer Gruppe umfassend mindestens ein drittes Polyisobutylen, bevorzugt genau ein drittes Polyisobutylen. In einer alternativen Ausführungsform kann die mindestens eine dritte Verbindung ausgewählt sein aus einer Gruppe umfassend mindestens einen dritten Butylkautschuk, bevorzugt genau einen dritten Butylkautschuk. In einer weiteren alternativen Ausführungsform kann auch vorgesehen sein, dass die mindestens eine dritte Verbindung ausgewählt ist aus einer Gruppe umfassend mindestens ein drittes Polyisobutylen und mindestens einen dritten Butylkautschuk. Soweit eine Mischung aus mindestens einem dritten Polyisobutylen und mindestens einen dritten Butylkautschuk vorliegt, kann das mindestens eine dritte Polyisobutylen und der mindestens eine dritte Butylkautschuk in etwa gleicher Menge in der Zusammensetzung vorliegen. Es kann jedoch auch vorgesehen sein, dass unterschiedliche Mengen des mindestens einen dritten Polyisobutylens und des mindestens einen dritten Butylkautschuks in dieser vorliegen.

Besonders bevorzugt umfasst die erfindungsgemäße Korrosionsschutzzusammensetzung genau eine erste Verbindung, genau eine zweite Verbindung und genau eine dritte Verbindung. Besonders bevorzugt umfasst die erfindungsgemäße Zusammensetzung als erste Verbindung genau ein erstes Polyisobutylen oder genau einen ersten, depolymerisierten Butylkautschuk, als zweite Verbindung genau ein zweites Polyisobutylen oder genau einen zweiten, teilweise vernetzten Butylkautschuk, und als dritte Verbindung genau ein drittes Polyisobutylen oder genau einen dritten Butylkautschuk. Besonders bevorzugt umfasst die erfindungsgemäße Zusammensetzung mindestens einen ersten, depolymerisierten Butylkautschuk, mindestens ein zweites Polyisobutylen und als dritte Verbindung entweder mindestens einen dritten Butylkautschuk oder mindestens ein drittes Polyisobutylen. Bevorzugt umfasst die Korrosionsschutzzusammensetzung genau einen ersten, depolymerisierten Butylkautschuk, genau ein zweites Polyisobutylen, und genau entweder einen dritten Butylkautschuk oder aber ein drittes Polyisobutylen. Bevorzugt sind bei den genannten Zusammensetzungen diejenigen Butylkautschuke und Polyisobutylene eingesetzt, die weiter vorstehend als bevorzugt oder weiter bevorzugt in ihren Eigenschaften und Mengen charakterisiert sind.

In einer alternativen Ausführungsform umfasst die erfindungsgemäße Korrosionsammensetzung als erste Verbindung mindestens ein erstes Polyisobutylen, mindestens einen zweiten, teilweise vernetzten Butylkautschuk als zweite Verbindung und als dritte Verbindung entweder mindestens einen dritten Butylkautschuk oder mindestens ein drittes Polyisobutylen. Bevorzugt umfasst die erfindungsgemäß Zusammensetzung als erste Verbindung genau ein erstes Polyisobutylen, als zweite Verbindung genau einen zweiten, teilweise vernetzten Butylkautschuk, und als dritte Verbindung entweder genau einen dritten Butylkautschuk oder aber ein drittes Polyisobutylen. Die in den vorgenannten Zusammensetzungen vorhandenen Polyisobutylene und Butylkautschuke sind mit ihren bevorzugten beziehungsweise weiter bevorzugten Eigenschaften und Mengen, wie weiter vorstehend charakterisiert, eingesetzt.

Bevorzugt umfasst die erfindungsgemäße Zusammensetzung mindestens ein erstes Polyisobutylen in einer Menge in einem Bereich von etwa 30 Gew.-% bis etwa 50 Gew.-%, mindestens einen zweiten, teilweise vernetzten Butylkautschuk in einer Menge in einem Bereich von etwa 2 Gew.-% bis etwa 10 Gew.-%, und ein drittes Polyisobutylen in einer Menge in einem Bereich von etwa 12 Gew.-% bis etwa 30 Gew.-% oder einen dritten Butylkautschuk in einer Menge in einem Bereich von 12 Gew.-% bis etwa 30 Gew.-%, wobei die Gewichtsprozentangaben jeweils bezogen sind auf die Gesamtmenge der erfindungsgemäßen Zusammensetzung. In einer alternativen Ausführungsform umfasst die erfindungsgemäße Zusammensetzung etwa 30 Gew.-% bis etwa 50 Gew.-% eines ersten, depolymerisierten Butylkautschuks, etwa 2 Gew.-% bis etwa 10 Gew.-% eines zweiten Polyisobutylens, und in etwa 12 Gew.-% bis etwa 30 Gew.-% mindestens eines dritten Polyisobutylens oder etwa 12 Gew.-% bis etwa 30 Gew.-% mindestens eines dritten Butylkautschuks, wobei die Gewichtsprozentangaben jeweils bezogen sind auf die Gesamtmenge der erfindungsgemäßen Zusammensetzung. Bei den vorstehend genannten Zusammensetzungen weisen die eingesetzten Polyisobutylene und Butylkautschuke die bevorzugten oder weiter bevorzugten Eigenschaften wie weiter vorstehend charakterisiert bevorzugt auf.

In einer bevorzugten Ausführungsform, optional in Kombination mit einem ersten, zweiten und/oder dritten Butylkautschuk wie vorstehend definiert, weist unabhängig voneinander

- das mindestens eine erste Polyisobutylen einen Staudinger-Index $J_0$ in einem Bereich von etwa 15 cm$^3$/g bis etwa 70 cm$^3$/g und eine mittlere relative Molmasse $\overline{M}_v$ (Viskositätsmittel) in einem Bereich von etwa 14.000 g/mol bis etwa 147.000 g/mol; das mindestens eine zweite Polyisobutylen einen Staudinger-Index $J_0$ in einem Bereich von etwa 240 cm$^3$/g bis etwa 900 cm$^3$/g und eine mittlere relative Molmasse $\overline{M}_v$ (Viskositätsmittel) in einem Bereich von etwa 980.000 g/mol bis etwa 7.493.000 g/mol; und das mindestens eine dritte Polyisobutylen einen Staudinger-Index $J_0$ in einem Bereich von etwa 75 cm$^3$/g bis etwa 235 cm$^3$/g und eine mittlere relative Molmasse $\overline{M}_v$ (Viskositätsmittel) in einem Bereich von etwa 164.000 g/mol bis etwa 950.000 g/mol auf.

In einer bevorzugten Ausführungsform, optional in Kombination mit einem ersten, zweiten und/oder dritten Butylkautschuk wie vorstehend definiert, weist unabhängig voneinander

- das mindestens eine erste Polyisobutylen einen Staudinger-Index $J_0$ in einem Bereich von etwa 24,9 cm$^3$/g bis etwa 54,4 cm$^3$/g und eine mittlere relative Molmasse $\overline{M}_v$ (Viskositätsmittel) in einem Bereich von etwa 30.000 g/mol bis etwa 100.000 g/mol;
- das mindestens eine zweite Polyisobutylen einen Staudinger-Index $J_0$ in einem Bereich von etwa 227,0 cm$^3$/g bis etwa 820,6 cm$^3$/g und eine mittlere relative Molmasse $\overline{M}_v$ (Viskositätsmittel) in einem Bereich von etwa 900.000 g/mol bis etwa 6.500.000 g/mol; und
- das mindestens eine dritte Polyisobutylen einen Staudinger-Index $J_0$ in einem Bereich von etwa 70,8 cm$^3$/g bis etwa 218,7 cm$^3$/g und eine mittlere relative Molmasse $\overline{M}_v$ (Viskositätsmittel) in einem Bereich von etwa 150.000 g/mol bis etwa 850.000 g/mol auf.

In einer weiteren bevorzugten Ausführungsform umfasst die Korrosionsschutzzusammensetzung

- mindestens eine erste Verbindung ausgewählt aus einer Gruppe umfassend mindestens ein erstes Polyisobutylen mit einer mittleren relativen Molmasse $\overline{M}_v$ in einem Bereich von etwa 35.000 g/mol bis etwa 90.000 g/mol und/oder mindestens einen ersten, depolymerisierten Butylkautschuk mit einer scheinbaren Viskosität nach Brookfield bei 66°C gemäß DIN EN ISO 2555 : 2000-01 in einem Bereich von etwa 500.000 mPa · s bis etwa 2.000.000 mPa · s, einem mittleren Molekulargewicht $M_w$ in einem Bereich von etwa 30.000 bis etwa 45.000 und einem Grad der Unsättigung von 2,0 bis 4,0 Mol-%;
- mindestens eine zweite Verbindung, ausgewählt aus einer Gruppe umfassend mindestens ein zweites Polyisobutylen mit einer mittleren relativen Molmasse $\overline{M}_v$ in einem Bereich von etwa 1.000.000 g/mol bis etwa 4.000.000 g/mol und/oder mindestens einen zweiten, teilweise vernetzten Butylkautschuk mit einer Mooney-Viskosität ML(1+3) bei 127°C in einem Bereich von etwa 60 MU bis etwa 90 MU gemäß ISO 289 : 2005 und einem Grad der Unsättigung von weniger als 1,0 Mol-%; sowie
- optional mindestens eine dritte Verbindung, ausgewählt aus einer Gruppe umfassend mindestens ein drittes Polyisobutylen mit einer mittleren relativen Molmasse $\overline{M}_v$ in einem Bereich von etwa 200.000 g/mol bis etwa 800.000 g/mol und/oder mindestens einen dritten Butylkautschuk mit einem mittleren Molekulargewicht $M_w$ in einem Bereich von etwa 150.000 bis etwa 2.000.000, einer Mooney-Viskosität ML(1+8) bei 125°C in einem Bereich von etwa 40 MU bis etwa 60 MU, gemessen gemäß ISO 289 : 2005, und einem Grad der Unsättigung von 1,0 bis 2,0 Mol-%,

wobei die Korrosionsschutzzusammensetzung mindestens ein erstes oder mindestens ein zweites Polyisobutylen als auch mindestens einen ersten oder mindestens einen zweiten Butylkautschuk umfasst.

In einer weiteren bevorzugten Ausführungsform umfasst die erfindungsgemäße Korrosionsschutzzusammensetzung ein erstes, zweites und drittes Polyisobutylen, das jeweils die vorgenannten Werte, bevorzugt die genannten bevorzugten Werte, für den Staudinger-Index $J_0$ und die mittlere relative Molmasse $\overline{M}_v$ (Viskositätsmittel) aufweist, insbesondere genau ein erstes, genau ein zweites und genau ein drittes Polyisobutylen, das jeweils die vorgenannten Werte, bevorzugt die genannten bevorzugten Werte, für den Staudinger-Index $J_0$ und die mittlere relative Molmasse $\overline{M}_v$ (Viskositätsmittel) aufweist.

Bevorzugt umfasst die erfindungsgemäße Korrosionsschutzzusammensetzung neben den genannten mindestens einen ersten, mindestens einen zweiten und/oder mindestens einen dritten Verbindungen ein Füllmaterial, mindestens ein Antioxidationsmittel, mindestens ein Vernetzungsmittel, mindestens ein Elastomer und/oder ein Stabilisationsmittel. Die genannten weiteren Bestandteile können alleine oder in Kombination der erfindungsgemäßen Zusammensetzung zugesetzt sein. Besonders bevorzugt umfasst die erfindungsgemäße Korrosionsschutzzusammensetzung neben der mindestens einen ersten und der mindestens einen zweiten Verbindung, weiter bevorzugt auch neben der mindestens einen dritten Verbindung, mindestens ein Füllmaterial. Das mindestens eine Füllmaterial ist vorzugsweise in einer Menge in einem Bereich von 18 Gew.-% bis 77 Gew.-%, weiter bevorzugt in einer Menge in einem Bereich von etwa 30 Gew.-% bis etwa 65 Gew.-%, und noch weiter bevorzugt in einer Menge in einem Bereich von etwa 33 Gew.-% bis etwa 50 Gew.-%, jeweils bezogen auf die Gesamtmenge der Zusammensetzung, von dieser umfasst. Besonders bevorzugt ist das mindestens eine Füllmaterial pulverförmig oder faserförmig ausgebildet. Unter dem Begriff faserförmig fallen im Sinne der vorliegenden Erfindung auch solche Füllmaterialien, welche eine nadelförmige Struktur aufweisen. Besonders bevorzugt umfasst die erfindungsgemäße Zusammensetzung mindestens ein erstes pulverförmiges Füllmaterial und mindestens ein zweites faserförmiges Füllmaterial. Besonders bevorzugt ist bei einer solchen kombinierten Zugabe mindestens eines pulverförmigen und mindestens eines faserförmigen Füllmateriales das faserförmige Füllmaterial in einer Menge bis maximal zu derjenigen des pulverförmigen Füllmateriales zugegeben. Ein pulverförmiges als auch ein faserförmiges Füllmaterial können in einer Menge in einem Bereich von etwa 10 Gew.-% bis etwa 40 Gew.-%, bevorzugt in einer Menge in einem Bereich von etwa 12 Gew.-% bis etwa 25 Gew.-%, jeweils bezogen auf die Gesamtmenge der Zusammensetzung, jeweils von der Zusammensetzung umfasst sein.

Bevorzugt ist das mindestens eine Füllmaterial ausgewählt aus einer Gruppe der pulverförmigen mineralischen Füllstoffe oder der mineralischen und/oder organischen faserartigen Füllstoffe. Beispielsweise kann es aus Metall, Zinkoxid, Cellulosefasern, Wollastonit in Nadelform oder ähnlichem sein. Es kann auch ausgewählt sein aus einer Gruppe organischer Fasern wie beispielsweise aus Acrylnitrilfasern mit einer Länge in einem Bereich von etwa 1,5 mm bis etwa 20 mm, weiter bevorzugt mit einer Länge in einem Bereich von etwa 4 mm bis etwa 15 mm, und einer Feinheit in einem Bereich von etwa 0,5 dtex bis etwa 100 dtex, weiter bevorzugt mit einer Feinheit in einem Bereich von etwa 1 dtex bis etwa 20 dtex, jeweils gemessen gemäß ISO 1144 in der Version von 1973. Soweit ein pulverförmiger Füllstoff, insbesondere ein mineralischer pulverförmiger Füllstoff, eingesetzt ist, weist dieser vorteilhafterweise einen Rückstand in % bei einer Siebanalyse gemäß der DIN 66165 in der Version 1987-04 bei H-100 (100 $\mu$m) von etwa 1 % bis etwa 5 %, bei H-60 (60 $\mu$m) von etwa 1 % bis etwa 5 % und bei H-30 (30 $\mu$m) in einem Bereich von etwa 1 % bis etwa 5 % auf. Vorteilhafterweise weist die erfindungsgemäße Korrosionsschutzzusammensetzung mindestens ein Füllmaterial auf. Ist das Füllmaterial ein pulverförmiges, ist dieses vorteilhafterweise ausgewählt aus der Gruppe der mineralischen Füllstoffe, ist besonders bevorzugt ein Talkum.

Soweit mindestens ein Antioxidationsmittel vorgesehen ist, kann dieses, vorzugsweise in einer Mischung verschiedener Antioxidationsmittel, in einer Menge in einem Bereich von etwa 0,1 Gew.-% bis etwa 1 Gew.-%, weiter bevorzugt in einer Menge in einem Bereich von etwa 0,15 Gew.-% bis etwa 0,5 Gew.-%, jeweils bezogen auf die Gesamtmenge der erfindungsgemäßen Korrosionsschutzzusammensetzung, von dieser umfasst sein. Soweit in der erfindungsgemäßen Korrosionsschutzzusammensetzung mindestens ein Stabilisationsmittel, das auch als Dispergierhilfsmittel bezeichenbar ist, vorhanden ist, ist dieses vorteilhafterweise ausgewählt aus einer Gruppe umfassend $C_{10}$- bis $C_{24}$-Carbonsäuren, und ist vorteilhafterweise Stearinsäure. Das mindestens eine Stabilisationsmittel ist bevorzugt in einer Menge in einem Bereich von etwa 0,05 Gew.-% bis etwa 0,5 Gew.-%, bezogen auf die Gesamtmenge der Zusammensetzung, von der erfindungsgemäßen Korrosionsschutzzusammensetzung umfasst. Als Stabilisationsmittel können beispielsweise auch Metallsalze der angesprochenen Carbonsäuren, beispielsweise Zinkstearate, oder freie Carbonsäuren, wie beispielsweise freie Fettsäuren mit 12 bis 24 Kohlenstoffatomen, insbesondere Stearinsäure oder Ölsäure, eingesetzt werden.

Des Weiteren kann die erfindungsgemäße Zusammensetzung noch sonstige Zusätze, die üblich und notwendig je nach Einsatzzweck sind, aufweisen. Insbesondere kann die erfindungsgemäße Korrosionsschutzzusammensetzung weiterhin mindestens ein Flammenschutzmittel, mindestens ein Vernetzungsmittel und/oder mindestens ein Elastomer aufweisen. Soweit ein Flammschutzmittel vorgesehen ist, ist dieses vorteilhafterweise in einer Menge in einem Bereich von etwa 0,02 Gew.-% bis etwa 2 Gew.-%, bezogen auf die Gesamtmenge der erfindungsgemäßen Korrosionsschutzzusammensetzung, von dieser umfasst.

Soweit die erfindungsgemäße Korrosionsschutzzusammensetzung mindestens ein Vernetzungsmittel aufweist, ist dieses vorteilhafterweise in einer Menge in einem Bereich von etwa 0,1 Gew.-% bis etwa 10 Gew.-%, weiter bevorzugt in einer Menge in einem Bereich von etwa 0,2 Gew.-% bis etwa 8 Gew.-%, jeweils bezogen auf die Gesamtmenge der erfindungsgemäßen Korrosionsschutzzusammensetzung, von dieser umfasst. Das Vernetzungsmittel ist insbesondere dann vorgesehen, wenn die erfindungsgemäße Korrosionsschutzzusammensetzung Bestandteil eines ein- oder mehrlagigen Bandes, insbesondere eines Wickelbandes für Rohre gleich welcher Art, insbesondere Pipelines, ist. Es kann jedoch auch zugegen sein, wenn die erfindungsgemäße Korrosionsschutzzusammensetzung als Streich- bzw. Spachtelmasse ausgebildet ist. Das mindestens eine Vernetzungsmittel ist vorteilhafterweise ausgewählt aus einer Gruppe umfassend mindestens ein Phenolharz. Phenolharze werden über Vernetzungsreaktionen zu Duroplasten, den sogenannten Phenoplasten, nachgehärtet. Eine derartige Vernetzungsreaktion kann in der erfindungsgemäßen Korrosionsschutzzusammensetzung stattfinden, insbesondere soweit diese mindestens einen ersten, depolymerisierten oder mindestens einen zweiten, zumindest teilweise vernetzten, oder aber auch mindestens einen dritten Butylkautschuk oder mindestens ein teilweise ungesättigtes Polyisobutylen umfasst, wie weiter unten beschrieben. Phenolharze sind Kondensationsprodukte von Phenol mit Aldehyden, vorzugsweise mit Formaldehyd. Im Sinne der vorliegenden Erfindung ist besonders bevorzugt von der erfindungsgemäßen Korrosionsschutzzusammensetzung umfasst mindestens ein Phenolharz, welches Hydroxymethyl-Gruppen aufweist. Diese Hydroxymethyl-Gruppen stellen die reaktiven bzw. funktionellen Gruppen dar, über welche eine Vernetzungsreaktion, die auch als Selbsthärtungsreaktion angesprochen werden kann, mit den funktionellen Gruppen, d. h. den Kohlenstoff-Kohlenstoff-Doppelbindungen, des mindestens einen ersten, depolymerisierten, des mindestens einen zweiten, teilweise vernetzten und/oder mindestens einen dritten Butylkautschuks oder aber teilweise ungesättigten Polyisobutylenen erfolgt. Besonders bevorzugt im Sinne der vorliegenden Erfindung ist das mindestens eine Phenolharz hergestellt aus mindestens einem Phenol oder dessen Derivaten und mindestens einem Aldehyd, ausgewählt aus einer Gruppe umfassend Formaldehyd, Acetaldehyd, Benzaldehyd und/oder Acrolein, wobei besonders bevorzugt Formaldehyd ist. Als Phenolderivate werden insbesondere tetra-Butylphenol, Nonylphenol oder Octylphenol eingesetzt, wobei aber auch Aryl-Derivate, insbesondere Phenylphenol, als auch zweiwertige Phenole wie Resorcin oder Bisphenol A oder Naphthole eingesetzt werden können. Besonders bevorzugt sind Octylphenol-Formaldehyd-Harze. Phenolharze als Vernetzungsmittel sind insbesondere solche, die in die Klasse der sogenannten Resole fallen, d. h. durch eine basisch-katalysierte Reaktion der genannten Ausgangsprodukte hergestellt werden.

In Überlappungsbereichen bei Wicklung eines mindestens zweischichtigen Bandes, welches mindestens eine Schicht der erfindungsgemäßen Korrosionsschutzzusammensetzung als äußere Schicht aufweist, kommt die mindestens eine Schicht der erfindungsgemäßen Korrosionsschutzzusammensetzung in Berührung mit der weiteren Schicht. Diese weitere Schicht, beispielsweise eine Haftvermittlungsschicht, kann dabei vorteilhafterweise Katalysatormittel aufweisen, welche die Vernetzungsreaktion beschleunigen, insbesondere bei niedrigen Temperaturen, beispielsweise bei einer Raumtemperatur von 23°C. Geeignete Katalysatormittel sind ausgewählt aus einer Gruppe umfassend mindestens ein Zinkchlorid, Zinkbromid, Eisenchlorid, Antimonchlorid, Antimonbromid, Zinnbromid, Germaniumchlorid, Kobaltbromid, Nickelchlorid und/oder organische Salze des Zinn oder Zink, wie beispielsweise Zinkstearate oder Zinkoleate, wobei besonders bevorzugt Zinn- oder Zinkhalogenide, und weiter bevorzugt Zinnchlorid und Zinkchlorid, allein oder in Mischung, eingesetzt werden. Das Katalysatormittel ist in dieser weiteren Schicht eines Bandes, die bevorzugt die erfindungsgemäße Korrosionsschutzzusammensetzung nicht enthält, vorteilhafterweise in einer Menge in einem Bereich von etwa 0,1 Gew.-% bis etwa 5 Gew.-%, weiter bevorzugt in einer Menge in einem Bereich von etwa 0,15 Gew.-% bis etwa 4,5 Gew.-%, und noch weiter bevorzugt in einer Menge in einem Bereich von etwa 0,2 Gew.-% bis etwa 4 Gew.-%, jeweils bezogen auf die Gesamtmenge dieser weiteren Schicht, von dieser umfasst.

Wird ein Katalysatormittel vorgesehen, kann vorzugsweise in dem Material, welches dieses umfasst, mindestens ein Co-Reagenz vorgesehen sein, ausgewählt aus einer Gruppe umfassend Divinylfumarat, Divinyladipat und Triallyl-Trichlorbenzol, wobei besonders bevorzugt ein Triallyl-Trichlorbenzol ausgewählt ist. Das Co-Reagenz dient insbesondere der Verträglichmachung des eingesetzten Katalysatormittels in dem Material, in welchem der Katalysator enthalten ist. Das Co-Reagenz ist in dem Material, in dem das Katalysatormittel enthalten ist, vorteilhafterweise in einer Menge in einem Bereich von etwa 0,5 Gew. % bis etwa 5 Gew. %, weiter bevorzugt in einer Menge in einem Bereich von etwa 2 Gew. % bis etwa 4,5 Gew. %, bezogen auf die Gesamtmenge des Katalysatormittels enthaltenden Materials, von diesem umfasst.

Das mindestens eine Elastomer ist vorteilhafterweise ausgewählt aus einer Gruppe umfassend mindestens einen Ethylen-Propylen-Dien-Kautschuk. Hierunter werden insbesondere solche Co- oder Block-Co-Polymere als auch Terpolymere verstanden, welche als funktionelle Gruppen eine Kohlenstoff-Kohlenstoff-Doppelbindung aufweisen. Auch hiervon können Gemische eingesetzt werden. Besonders bevorzugt sind Terpolymere, die aus einer Polymerisationsreaktion mit Ethylen, Propylen und einem Dien entstehen. Diese werden auch EPDM-Terpolymere genannt und vereinigen ein gesättigtes Polymerrückgrat mit ungesättigten Resten in Seitengruppen. Besonders bevorzugt im Sinne der vorliegenden Erfindung werden dabei 5-Ethyliden-2-Norbornen, Dicyclopentadien und/oder 5-Vinyliden-2-Norbornen als Dien eingesetzt, und zwar in Mengen bis zu etwa 15 Gew.-%, bevorzugt in Mengen in einem Bereich von etwa 0,3 Gew.-% bis etwa 12 Gew.-%. Im Falle des Einsatzes von 5 Ethyliden-2-Norbornen werden vorzugsweise Mengen in einem Bereich von etwa 4 Gew.-% bis etwa 11 Gew.-% und im Falle eines Einsatzes von Dicyclopentadien Mengen in einem Bereich von etwa 1,0 Gew.-% bis etwa 6,0 Gew.-% eingesetzt. Die vorstehenden Gew.-%-Angaben sind dabei bezogen auf die Gesamtmenge der Monomere, die in einer Polymerisation zu einem EPDM bzw. Ethylen-Propylen-Kautschuk eingesetzt sind.

Eine besonders bevorzugte erfindungsgemäße Korrosionsschutzzusammensetzung umfasst etwa 30 Gew.-% bis etwa 50 Gew.-% der mindestens einen ersten Verbindung, etwa 2 Gew.-% bis etwa 10 Gew.-% der mindestens einen zweiten Verbindung, etwa 12 Gew.-% bis etwa 30 Gew.-% der mindestens einen dritten Verbindung, und etwa 25 Gew.-% bis etwa 45 Gew.-% mindestens eines Füllmateriales, wobei die Mengen jeweils bezogen sind auf die Gesamtmenge der erfindungsgemäßen Korrosionsschutzzusammensetzung.

In einer besonders bevorzugten Ausführungsform umfasst die erfindungsgemäße Korrosionsschutzzusammensetzung etwa 35 Gew.-% bis etwa 45 Gew.-% genau eines ersten Polyisobutylens, etwa 3 Gew.-% bis etwa 7 Gew.-% genau eines zweiten, teilweise vernetzten Butylkautschuks, etwa 15 Gew.-% bis etwa 25 Gew.-% genau eines dritten Polyisobutylens und etwa 30 Gew.-% bis etwa 40 Gew.-% zweier Füllmaterialien, wobei ein Füllmaterial ein mineralisch pulverförmiges Füllmaterial ist und das andere Füllmaterial ein mineralisch nadelförmiges Füllmaterial. In einer weiter bevorzugten Ausführungsform umfasst die erfindungsgemäße Korrosionsschutzzusammensetzung etwa 35 Gew.-% bis etwa 45 Gew.-% genau eines ersten, depolymerisierten Butylkautschuks, etwa 3 Gew.-% bis etwa 7 Gew.-% genau eines zweiten Polyisobutylens, etwa 15 Gew.-% bis etwa 25 Gew.-% genau eines dritten Polyisobutylens oder eines dritten Butylkautschuks, und etwa 30 Gew.-% bis etwa 45 Gew.-% eines Füllmaterials, ausgewählt aus einer Gruppe mineralischer pulverförmiger Füllmaterialien.

In den vorgenannten bevorzugten und besonders bevorzugten Zusammensetzungen der erfindungsgemäßen Korrosionsschutzzusammensetzungen kann zudem, soweit notwendig, etwa 0,1 Gew.-% bis etwa 0,5 Gew.-% mindestens eines Stabilisationsmittels und/oder 0,15 Gew.-% bis etwa 0,6 Gew.-% mindestens eines Antioxidationsmittels, jeweils bezogen auf die Gesamtmenge der erfindungsgemäßen Zusammensetzung von dieser umfasst sein.

Soweit in der vorliegenden Erfindung der Begriff "etwa" in Bezug auf Werte, Wertbereiche oder werthaltige Begriffe verwendet wird, ist hierunter dasjenige zu verstehen, was der Fachmann im gegebenen Zusammenhang als fachmännisch üblich ansehen wird. Insbesondere sind Abweichungen der angegebenen Werte, Wertbereiche oder werthaltige Begriffe von +-10 %, bevorzugt +-5 %, weiter bevorzugt +-2 %, von dem Begriff "etwa" umfasst.

Die erfindungsgemäße Korrosionsschutzzusammensetzung kann weiterhin mindestens einen Tackifier, insbesondere ein Kohlenwasserstoffharz, in einer Menge in einem Bereich von etwa 5 Gew.-% bis etwa 25 Gew.-%, weiter bevorzugt in einer Menge in einem Bereich von etwa 8 Gew.-% bis etwa 20 Gew.-%, jeweils bezogen auf die Gesamtmenge der erfindungsgemäßen Korrosionsschutzzusammensetzung, umfassen.

Besonders bevorzugt liegt die erfindungsgemäße Korrosionsschutzzusammensetzung in Bandform oder Mattenform vor. Besonders bevorzugt ist die Bandform.

Besonders bevorzugt ist das Band mindestens einlagig aufgebaut, weiter bevorzugt ist es mindestens zweilagig aufgebaut, kann aber auch drei-, vier-, fünf- oder sonst wie mehrlagig ausgebildet sein. So kann dieses beispielsweise derart aufgebaut sein, dass es zwei äußere Lagen umfassend die erfindungsgemäße Korrosionsschutzzusammensetzung aufweist, welche eine innere Lage, gebildet aus einer Trägerfolie, insbesondere einer solchen hergestellt aus mindestens einem Polyethylen und/oder Polypropylen, bevorzugt aus einem Polyethylen, umfassen. Dabei kann die Trägerfolie, die je nach Stärke auch als Streckbremse wirken kann, auf einer oder beiden Seiten derselben, die den Schichten aus der erfindungsgemäßen Korrosionsschutzzusammensetzung zugewandt sind, eine Haftvermittlungsschicht aufweisen.

Es kann auch vorgesehen sein, dass das Band nur eine einzige Lage aus der erfindungsgemäßen Korrosionsschutzzusammensetzung aufweist, welche mit einer Trägerfolie, insbesondere einer solchen, wie vorstehend definiert, verbunden ist, wobei die Trägerfolie auf einer oder beiden Seiten eine Haftvermittlungsschicht aufweisen kann. Bei einem solchen Aufbau weist die Trägerfolie, die dann in erster Linie einer Stabilisierung der Lage aus der erfindungsgemäßen Korrosionsschutzzusammensetzung dient, eine gewisse Stärke, bevorzugt in einem Bereich von etwa 0,2 mm bis etwa 1,2 mm, weiter bevorzugt etwa 0,3 mm bis etwa 0,7 mm, auf. Weiter bevorzugt weist die Trägerfolie auf ihren beiden Außenseiten Haftvermittlungsschichten mit gleichen oder unterschiedlichen Zusammensetzungen auf. So kann die Trägerfolie auf ihrer der aus der erfindungsgemäßen Korrosionsschutzzusammensetzung gebildeten Lage zugewandten Seite vorzugsweise eine Haftvermittlungsschicht aufweisen, die aus dem gleichen Material wie die Trägerfolie und dem mindestens einen zweiten und/oder mindestens einen dritten Polyisobutylen und/oder dem mindestens einen zweiten, teilweise vernetzten und/oder einem mindestens einen dritten Butylkautschuk der Lage aus der erfindungsgemäßen Korrosionsschutzzusammensetzung, bevorzugt ausschließlich aus den vorgenannten Materialien, gebildet ist. Die weitere Haftvermittlungsschicht, die auf der der Lage aus der erfindungsgemäßen Korrosionsschutzzusammensetzung abgewandten Seite der Trägerfolie aufgebracht ist, kann hingegen, insbesondere bei Vorsehung eines mindestens einlagigen zweiten Bandes, welches insbesondere als ein einen mechanischen Schutz vermittelndes Band um das Band mit der erfindungsgemäßen Korrosionsschutzzusammensetzung auf dem betreffenden Produkt wickelbar ist, neben mindestens einem zweiten und/oder mindestens einem dritten Polyisobutylen und/oder dem mindestens einen zweiten, teilweise vernetzten und/oder einem mindestens einen dritten Butylkautschuk gemäß der erfindungsgemäßen Zusammensetzung und dem Material der Trägerfolie, insbesondere einem Polyethylen und/oder Polypropylen, auch Tackifier, insbesondere in Form von Kohlenwasserstoffharzen, sowie Antioxidantien und insbesondere die vorstehend bereits angesprochenen Katalysatoren und/oder Co-Reagenzien für diese aufweisen. Das Katalysatormittel und/oder Co-Reagenz kann dabei insbesondere bei höheren Temperaturen, insbesondere solchen ab etwa 50°C, bevorzugt solchen in einem Bereich von etwa 55°C bis etwa 220°C, weiter bevorzugt in einem Bereich von etwa 60°C bis etwa 140°C, die Vernetzungsreaktion in dem mindestens einen zweiten, teilweise vernetzten und/oder mindestens einen dritten Butylkautschuk initiieren, ggf. auch in dem weiterhin vorhandenen Elastomer, wie vorstehend beschrieben. Das Katalysatormittel, einzeln oder in Mischung, ist in der äußeren Haftvermittlungsschicht vorzugsweise in einer Menge in einem Bereich von etwa 0,1 Gew.-% bis etwa 10 Gew.-%, bevorzugt in einem Bereich von etwa 0,15 Gew.-% bis etwa 4 Gew.-%, jeweils bezogen auf die Gesamtmenge der äußeren Haftvermittlungsschicht, umfasst. Bei Wicklung oder Aufbringung des Bandes mit mindestens einer Lage aus der erfindungsgemäßen Korrosionsschutzzusammensetzung auf rohrförmigen oder sonstigen Gegenständen mit einer Überlappung kann dann bei Vorsehung von mindestens einem Katalysatormittel in der äußeren Haftvermittlungsschicht eine Vernetzung, bevorzugt bei erhöhten Temperaturen, im Überlappungsbereich initiiert werden, so dass ein festerer Halt, insbesondere ohne Faltenbildung, im Überlappungsbereich erzielbar ist.

Das Band mit der erfindungsgemäßen Korrosionsschutzzusammensetzung kann insbesondere symmetrisch oder aber asymmetrisch aufgebaut sein. Ein symmetrisch aufgebautes Band weist, wie vorstehend schon beschrieben, eine Trägerfolie beispielsweise aus mindestens einem Polyethylen und/oder Polypropylen auf, welche auf ihren beiden Außenseiten umschlossen ist von jeweils einer Lage, die aus der erfindungsgemäßen Korrosionsschutzzusammensetzung gebildet ist. Beide äußeren Lagen weisen dabei vorzugsweise in etwa die gleiche Dicke auf. Zwischen Trägerfolie und der die Korrosionsschutzzusammensetzung aufweisenden Lagen kann dabei mindestens eine Haftvermittlungsschicht vorgesehen sein, wie ebenfalls vorstehend beschrieben. Ist die Haftvermittlungsschicht auf beiden Seiten der Trägerfolie angeordnet, weist diese ebenfalls in etwa die gleiche Stärke auf. Dann spricht man von einem symmetrisch aufgebauten 3- bzw. 5-Schichten bzw. 5-Lagen-Band, zählt man die Haftvermittlungsschichten im letztgenannten Fall mit.

Es kann vorgesehen sein, ein asymmetrisch aufgebautes Band zur Verfügung zu stellen. Dieses kann beispielsweise derart aufgebaut sein, dass eine Lage, die aus der erfindungsgemäßen Korrosionsschutzzusammensetzung gebildet ist und die dem abzudeckenden Produkt zugewandt wird, verbunden ist mit einer Trägerfolie, wie vorstehend definiert. Dabei kann zwischen der die erfindungsgemäße Korrosionsschutzzusammensetzung aufweisenden Lage und der Trägerfolie mindestens eine Haftvermittlungsschicht angeordnet sein. Auf der der Lage aus der erfindungsgemäßen Korrosionsschutzzusammensetzung abgewandten Seite der Trägerfolie kann auch beispielsweise nochmalig eine Lage aus der erfindungsgemäßen Korrosionsschutzzusammensetzung vorgesehen sein, welche eine geringere Stärke als die dem zu umhüllenden Produkt zugewandte Lage aufweist. Auch kann die Trägerfolie auf der der Lage aus der erfindungsgemäßen Korrosionsschutzzusammensetzung abgewandten Seite eine weitere Haftvermittlungsschicht aufweisen, die vorzugsweise ebenfalls mindestens ein erstes und/oder mindestens ein drittes Polyisobutylen und/oder mindestens einen zweiten, teilweise vernetzten und/oder mindestens einen dritten Butylkautschuk als auch das Material der Trägerfolie umfasst, und weiterhin bevorzugt zusätzlich Tackifier wie Kohlenwasserstoffharze, Katalysatormittel, Co-Reagenzien und sonstige Additive, wie vorstehend bereits beschrieben.

Im Sinne der vorliegenden Erfindung kann auch vorgesehen sein, dass das Band mit einer Lage aus der erfindungsgemäßen Korrosionsschutzzusammensetzung mindestens eine Lage einer Streckbremse umfasst. Dabei kann das Band beispielsweise derart ausgestaltet sein, dass dieses aus einer einzigen Lage aus der erfindungsgemäßen Korrosionsschutzzusammensetzung besteht, wobei in etwa mittig eine sehr dünne Zwischenlage, bevorzugt eine solche mit einer Stärke in einem Bereich von etwa 15 $\mu$m bis etwa 100 $\mu$m, weiter bevorzugt in einem Bereich von etwa 20 $\mu$m bis etwa 75 $\mu$m, eingebracht ist. Diese Zwischenlage dient als Streckbremse und verhindert eine Überdehnung des Bandes, insbesondere bei einer spiralförmigen Wicklung desselben um ein zu umhüllendes Produkt, beispielsweise eine Pipeline. Besonders bevorzugt ist die Streckbremse bzw. die Zwischenlage gebildet aus mindestens einem Polyethylen und/oder Polypropylen und ist besonders bevorzugt eine Polyethylen-Folie, insbesondere aus einem LDPE oder LLDPE. Eine solchermaßen mit einer Streckbremse versehene Lage aus der erfindungsgemäßen Korrosionsschutzzusammensetzung kann auch als zwei- oder alternativ als dreilagig angesprochen werden. Die Streckbremse kann dabei symmetrisch etwa in der Mitte, aber auch asymmetrisch verschoben zu der Oberseite oder Unterseite des Bandes in diesem angeordnet sein. Bevorzugt erfolgt jedoch eine symmetrische Anordnung etwa in der Mitte, d. h. bei halber Stärke des Bandes, soweit dieses ansonsten ausschließlich eine Lage umfasst, die aus der erfindungsgemäßen Korrosionsschutzzusammensetzung gebildet ist. Wie bereits schon vorstehend beschrieben kann jedoch auch vorgesehen sein, dass oberhalb der Streckbremse auf derjenigen Seite des Bandes, welche dem abzudeckenden Produkt abgewandt ist, eine weitere Lage angeordnet ist, die beispielweise ein Katalysatormittel aufweist, beispielsweise eine Haftvermittlungsschicht. In diesem Fall liegt ein echtes dreilagiges Band vor.

Die vorstehend angesprochenen Haftvermittlungsschichten weisen bevorzugt das mindestens eine zweite und/oder mindestens eine dritte Polyisobutylen und/oder den mindestens einen zweiten, teilweise vernetzten und/oder mindestens einen dritten Butylkautschuk der erfindungsgemäßen Korrosionsschutzzusammensetzung und mindestens ein Polyethylen und/oder Polypropylen auf. Besonders bevorzugt weisen, bevorzugt neben mindestens einem zweiten, teilweise vernetzten und/oder mindestens einem dritten Butylkautschuk, diese mindestens ein zweites oder mindestens ein drittes Polyisobutylen, bevorzugt mindestens ein drittes Polyisobutylen, noch weiter bevorzugt genau ein drittes Polyisobutylen oder eine Mischung eines zweiten und dritten Polyisobutylens auf, wobei die Menge des eingesetzten mindestens einen zweiten und/oder dritten Polyisobutylen in einem Bereich von etwa 35 Gew.-% bis etwa 65 Gew.-%, weiter bevorzugt in einem Bereich von etwa 40 Gew.-% bis etwa 60 Gew.-%, jeweils bezogen auf die Gesamtmenge der Haftvermittlungsschicht, liegt. In einer alternativen Ausführungsform weisen die vorstehend angesprochenen Haftvermittlungsschichten mindestens einen zweiten, teilweise vernetzten und/oder mindestens einen dritten Butylkautschuk, bevorzugt mindestens einen zweiten oder mindestens einen dritten Butylkautschuk, noch weiter bevorzugt genau einen zweiten oder einen dritten Butylkautschuk oder eine Mischung eines zweiten und eines dritten Butylkautschuks auf, wobei die Menge des eingesetzten mindestens einen zweiten und/oder dritten Butylkautschuks in einem Bereich von etwa 35 Gew.-% bis etwa 65 Gew.-%, weiter bevorzugt in einem Bereich von etwa 40 Gew.-% bis etwa 62 Gew.-%, jeweils bezogen auf die Gesamtmenge der Haftvermittlungsschicht, liegt. Das mindestens eine Polyethylen und/oder Polypropylen, bevorzugt mindestens ein Polyethylen, insbesondere ein LPDE oder LLDPE, weiter bevorzugt genau ein Polyethylen, ist von der Haftvermittlungsschicht umfasst in einer Menge in einem Bereich von etwa 25 Gew.-% bis etwa 65 Gew.-%, weiter bevorzugt in einer Menge in einem Bereich von etwa 30 Gew.-% bis etwa 60 Gew.-%, jeweils bezogen auf die Gesamtmenge der Haftvermittlungsschicht. Eine Zusammensetzung einer Haftvermittlungsschicht umfasst ausschließlich den mindestens einen zweiten und/oder mindestens einen dritten Butylkautschuk und das mindestens eine Polyethylen und/oder Polypropylen, bevorzugt genau einen zweiten oder einen dritten Butylkautschuk und genau ein Polyethylen, und ansonsten keine weiteren Zusätze.

Eine weitere Zusammensetzung einer Haftvermittlungsschicht umfasst neben dem mindestens einen zweiten und/oder mindestens einen dritten Polyisobutylen und/oder dem mindestens einen zweiten und/oder mindestens einen dritten Butylkautschuk und dem mindestens einen Polyethylen und/oder Polypropylen weitere Additive, und zwar bevorzugt Tackifier, Antioxidantien, Katalysatormittel, Co-Reagenzien, wie insbesondere oben beschrieben, als auch Farbpigmente. Dabei kann beispielsweise ein Tackifier in einer Menge in einem Bereich von etwa 5 Gew.-% bis etwa 15 Gew.-%, weiter bevorzugt in einer Menge in einem Bereich von etwa 7 Gew.-% bis etwa 13 Gew.-%, zugegen sein, und ist vorzugsweise ausgewählt aus einer Gruppe umfassend Kohlenwasserstoffharze. Darüber hinaus kann mindestens ein Antioxidationsmittel vorgesehen sein, bevorzugt in einer Menge in einem Bereich von etwa 0,05 Gew.-% bis etwa 0,5 Gew.-%, weiter bevorzugt in einer Menge von etwa 0,1 Gew.-% bis etwa 0,5 Gew.-%. Das Antioxidationsmittel kann dabei insbesondere ausgewählt sein aus einer Gruppe umfassend sterisch gehinderte Phenole, wie beispielsweise Pentaerythritol-Tetrakis (3-(3,5-di-ter-butyl-4-Hydroxiphenyl)Propionat). Daneben kann die Haftvermittlungsschicht auch mindestens ein Pigment aufweisen, insbesondere ein solches, welches in Form eines Masterbatches vorliegt. Das mindestens eine Pigment ist in einer Menge in einem Bereich von etwa 0,5 Gew.-% bis etwa 3 Gew.-%, weiter bevorzugt in einer Menge in einem Bereich von etwa 0,9 Gew.-% bis etwa 2 Gew.-%, in einer Zusammensetzung der Haftvermittlungsschicht vorhanden. Die vorgenannten Gew.-%-Angaben betreffend den Tackifier, das Antioxidationsmittel und das Pigment beziehen sich jeweils auf die Gesamtmenge der Haftvermittlungsschicht. Das Pigment kann beispielsweise ein Schwarzpigment sein, um dem Band einen einheitlichen Gesamteindruck zu vermitteln. Es kann jedoch auch zur Hervorhebung und Kenntlichmachung des Vorhandenseins einer Haftvermittlungsschicht ein jedwedes anderes Pigment, beispielsweise ein rotfarbiges, eingesetzt werden. Die Haftvermittlungsschicht hat vorzugsweise eine Stärke in einem Bereich von etwa 10 μm bis etwa 150 μm, weiter bevorzugt eine Stärke in einem Bereich von etwa 20 μm bis etwa 100 μm, noch weiter bevorzugt eine Stärke in einem Bereich von etwa 25 μm bis etwa 80 μm.

Die Trägerfolie, soweit sie nicht als Streckbremse ausgestaltet ist, weist vorteilhafterweise eine Stärke in einem Bereich von etwa 0,2 mm bis etwa 1,2 mm, weiter bevorzugt eine Stärke in einem Bereich von etwa 0,3 mm bis etwa 0,8 mm, auf. Die Trägerfolie besteht vorteilhafterweise aus Polyethylen oder Polypropylen, und besteht bevorzugt aus einem Polyethylen. Besonders bevorzugt ist die Trägerfolie ausgebildet aus einer Gruppe umfassend Polyethylene, die elektronenstrahlvernetzbar sind. Wird die Trägerfolie mit Haftvermittlungsschichten eingesetzt, ist in den Haftvermittlungsschichten ebenfalls ein Polyethylen eingesetzt, welches elektronenstrahlvernetzbar ist, bevorzugt das gleiche Polyethylen, wie dieses auch in der Trägerfolie vorhanden ist. Weiter vorteilhafterweise ist die Trägerfolie einer leichten Reckung unterzogen worden, so dass vorteilhafterweise eine Schrumpfneigung bei Erwärmung derselben entsteht und eine mögliche Längenausdehnung bei Erwärmung überkompensiert werden kann. Zudem wird bei einer Anwendung in Form einer Umwicklung rohrförmiger Gegenstände dann auch die Anpresskraft in Richtung auf den rohrförmigen Gegenstand verstärkt.

Weist die Trägerfolie auf einer oder auf beiden Seiten eine Haftvermittlungsschicht auf, so wird der gesamte Verbund bevorzugt einer leichten Reckung unterzogen. Ein derartig hergestellter Folienverbund wird dann nachfolgend mit der erfindungsgemäßen Korrosionsschutzzusammensetzung auf mindestens einer Seite beschichtet. Diese Schicht weist vorteilhafterweise eine Stärke in einem Bereich von etwa 0,25 mm bis etwa 2,0 mm, weiter bevorzugt eine Stärke in einem Bereich von etwa 0,35 mm bis etwa 1,3 mm auf. Wird die Trägerfolie auf beiden Seiten mit einer Haftvermittlungsschicht versehen und ist die Trägerfolie nur auf einer Seite mit der erfindungsgemäßen Korrosionsschutzzusammensetzung beschichtet, weist die äußere Haftvermittlungsschicht vorteilhafterweise Katalysatoren auf, ggf. auch Co-Reagenzien hierfür, wie vorstehend beschrieben. Die Zusammensetzung der auf beiden Seiten der Trägerfolie angeordneten Haftvermittlungsschichten kann damit besonders bevorzugt im Sinne der vorliegenden Erfindung unterschiedlich sein. Der vorstehend beschriebene Bandaufbau weist den Vorteil auf, dass einerseits im Überlappungsbereich bei Umhüllung oder Aufbringung eines solchen Bandes durch das vorgesehene Katalysatormittel ebenfalls eine Vernetzungsreaktion, soweit insbesondere der mindestens eine zweite und/oder der mindestens eine dritte Butylkautschuk zugegen ist, initiiert wird, und, gleich ob mit Überlappung aufgebracht oder nicht, das Band z. B. von einem identischen weiteren Band umwickelt werden kann, wobei dann das in der äußeren Haftvermittlungsschicht vorhandene mindestens eine Katalysatormittel die Vernetzung des diesem zugewandten, die erfindungsgemäße Korrosionsschutzzusammensetzung aufweisenden Teiles des weiteren Bandes initiiert. Die Trägerfolie kann weitere Additive umfassen, beispielsweise Pigmente, Antioxidationsmittel oder Stabilisatormittel/Dispergierhilfsmittel. In einer weiteren Ausgestaltung der vorliegenden Erfindung kann die erfindungsgemäße Korrosionsschutzzusammensetzung auch auf einer Seite einer Schrumpfmanschette oder eines Schrumpfbandes aufgebracht sein. Zusätzlich zu der Vermittlung einer guten Haftung durch Vernetzung aufgrund der spezifischen Zusammensetzung der erfindungsgemäßen Korrosionsschutzzusammensetzung kann aufgrund der für die Schrumpfung erforderlichen Erwärmung der Schrumpfmanschette bzw. des Schrumpfbandes eine weitergehende thermische Aktivierung der erfindungsgemäßen Korrosionsschutzzusammensetzung erfolgen, so dass die Vernetzungsreaktion gefördert wird und ein noch festerer Halt eines solchen Systems auf insbesondere einem rohrförmigen Gegenstand ermöglicht ist.

Zusätzlich zu dem vorstehend geschilderten mindestens einlagigen Band mit der erfindungsgemäßen Korrosionsschutzzusammensetzung kann ein zweites Band zur Vermittlung eines mechanischen Schutzes vorgesehen sein. Das zweite Band ist mindestens einlagig aufgebaut, und ist bevorzugt ein-, zwei- oder dreilagig aufgebaut. Es kann jedoch auch vier- oder sonst wie höherlagig aufgebaut sein. Das zweite Band ist als mechanisches Schutzband anzusprechen. Das zweite Band umfasst bevorzugt eine Lage aus mindestens einem Polyethylen und/oder Polypropylen, bevorzugt mindestens einem Polyethylen, bevorzugt elektronenstrahlvernetzbares Polyethylen, ausreichender Stärke. Soweit Polyethylen eingesetzt wird, weist dieses vorzugsweise eine Reißdehnung gemäß EN ISO 527 in der Version von 2012-06 von > 300 %, weiter bevorzugt > 400 %, noch weiter bevorzugt > 500 %, bevorzugt eine solche in einem Bereich von etwa 300 % bis etwa 800 %, auf. Weiter bevorzugt weist es eine Zugspannung gemäß EN ISO 527 in der Version von 2012-06 in einem Bereich von etwa 8 MPa bis etwa 25 MPa, weiter bevorzugt in einem Bereich von etwa 12 bis etwa 20 MPa, auf. Das zweite Band kann beispielsweise auch eingesetzt werden, um zwei identische Bänder mit der erfindungsgemäßen Korrosionsschutzzusammensetzung um einen rohrförmigen Gegenstand zu wickeln. Die Identität der vorstehend genannten Bänder mit der erfindungsgemäßen Korrosionsschutzzusammensetzung besteht vorteilhafterweise in einem identischen Aufbau und/oder identischer chemischer Zusammensetzung.

Die mindestens eine Lage aus Polyethylen und/oder Polypropylen, bevorzugt genau eine Lage, des zweiten Bandes kann auf einer Seite mit einer Klebeschicht versehen sein. Es kann jedoch auch vorgesehen sein, dass diese auf einer Seite mit einer Klebeschicht aus mindestens einem ersten und/oder mindestens einem dritten Butylkautschuk oder mindestens einem ersten Polyisobutylen und/oder mindestens einem dritten Polyisobutylen gemäß der erfindungsgemäßen Korrosionsschutzzusammensetzung gebildet ist. Daneben kann diese Schicht noch weitere Additive enthalten. Soweit eine Kleberschicht, wie vorstehend beschrieben, mit der Lage aus mindestens einem Polyethylen und/oder Polypropylen verbunden wird, wird dabei vorzugsweise für das zweite Band vorgesehen, dass zwischen diesen beiden Lagen eine Schicht zur Erzielung einer hinreichenden Haftung vorgesehen ist, wobei diese eine Zusammensetzung aufweisen kann, wie diese im Zusammenhang mit dem Band mit der erfindungsgemäßen Korrosionsschutzzusammensetzung weiter oben beschrieben ist.

Darüber hinaus kann weiterhin noch eine Rohrschutzmatte vorgesehen sein, welche um das mindestens eine Band mit mindestens einer Lage aus der erfindungsgemäßen Korrosionsschutzzusammensetzung, ggf. auch in Kombination mit einem zweiten Band, welches als Abdeck- und Schutzband dient, angeordnet ist, wodurch eine vorteilhafte, insbesondere lastverteilende Wirkung auf die unter der Rohrschutzmatte liegende Umhüllung aus dem mindestens einen Band vermittelt wird.

Mit der erfindungsgemäßen Korrosionsschutzzusammensetzung kann jedwedes Produkt, welches korrodieren kann, geschützt werden, insbesondere durch Abdeckung bei Vorliegen in Band- oder Matten-(Folien)-Form oder aber Verstreichen und Verspachteln der Masse zu Bildung einer Beschichtung. Besonders bevorzugt wird die erfindungsgemäße Korrosionsschutzzusammensetzung für Rohre und Anlagen mit Rohren eingesetzt. Insbesondere wird die erfindungsgemäße Korrosionsschutzzusammensetzung eingesetzt für die Umhüllung von Pipelines gleich welcher Art, aber auch zur Umhüllung von Gasleitungen etc. Sie kann auch eingesetzt werden für sonstige technische Anlagen und/oder in Bereichen, in welchen Korrosion auftreten kann, und dabei nicht nur in Form einer Wicklung, sondern auch z. B. in Form einer Auflage/Abdeckung, das Vorstehende bei Ausbildung als mindestens einlagiges Band oder mindestens einlagige Matte, oder aber in Form einer Beschichtung aus einer streichfähigen bzw. spachtelfähigen Masse der erfindungsgemäßen Korrosionsschutzzusammensetzung.

Die vorliegende Erfindung betrifft weiterhin die Verwendung der erfindungsgemäßen Korrosionsschutzzusammensetzung wie weiter vorstehend beschrieben zum Schutz von Rohren und Rohre umfassenden Anlagen sowie sonstigen Anlagen und Einbauten vor Korrosion. Des Weiteren betrifft die vorliegende Erfindung auch ein Verfahren zur Erzielung eines Korrosionsschutzes auf Rohren und Rohre umfassenden Anlagen sowie sonstigen Anlagen und Einbauten durch Aufbringung der erfindungsgemäßen Korrosionsschutzzusammensetzung.

Besonders bevorzugt bei dem erfindungsgemäßen Verfahren wird mindestens ein einlagiges Band, umfassend die erfindungsgemäße Korrosionsschutzzusammensetzung, um Rohre bzw. Rohre umfassende Anlagen gewickelt. Und schließlich betrifft die vorliegende Erfindung ein mindestens einlagiges Wickelband, umfassend die erfindungsgemäße Korrosionsschutzzusammensetzung wie vorstehend beschrieben.

Die vorliegende Erfindung wird anhand der nachfolgenden Beispiele näher erläutert. Es sei an dieser Stelle vorausgeschickt, dass die in den Beispielen angegebenen Merkmale solche sind, die mit sämtlichen einzeln oder miteinander in der allgemeinen Beschreibung beschriebenen Merkmalen kombinierbar sind. Insbesondere ist die Zusammensetzung der erfindungsgemäßen Korrosionsschutzzusammensetzung in Bandform nur eine beispielhafte.

Es wurden insgesamt sechs Vergleichszusammensetzungen 1 bis 6 und vier erfindungsgemäße Korrosionsschutzzusammensetzungen 7 bis 10 hergestellt, wobei deren Zusammensetzung der nachfolgenden Tabelle entnommen werden kann, in der auch die Schälfestigkeiten/Schälwiderstände, bestimmt gemäß DIN EN 12068 in der Version 1999-03, angegeben sind. Alle Zahlenwerte in der nachfolgenden Tabelle sind - falls nicht anders angegeben - in Gewichts-% (Gew.-%), jeweils bezogen auf die Gesamtmenge einer jeden der Zusammensetzungen 1 bis 10.

| Zusammensetzung Nr. | 1 | 2 | 3 | 4 | 5 | 6 | 7 | 8 | 9 | 10 |
|---|---|---|---|---|---|---|---|---|---|---|
| Erstes Polyisobutylen | 30 | 39,1 | 32,5 | 33 | 30 | 40 | 40 | | | 40 |
| Erster, depolymerisierter Butylkautschuk | | | | | | | | 39,5 | 37 | |
| Drittes Polyisobutylen | | | | | | 20 | 20 | 21 | 20 | 15 |
| Zweites Polyisobutylen | | | | | | 5 | | 3 | 8,5 | |
| Zweiter, teilweise vorvernetzter Butylkautschuk | | | | | | | 5 | | | 10 |
| Dritter Butylkautschuk | 10 | 17,4 | 9,5 | 10 | 10 | | | | | |
| Pulverförmiges, mineralisches Füllmaterial | 60 | 34,8 | 57 | 57 | 60 | 18,7 | 18,7 | 36 | 34 | 18,7 |
| Tackifier | | 8,7 | | | | | | | | |
| Faserförmiges, mineralisches Füllmaterial | | | | | | 16 | 16 | | | 16 |
| Antioxidationsmittel | | | | | | 0,2 | 0,2 | 0,4 | 0,4 | 0,2 |
| Stabilisationsmittel | | | | | | 0,1 | 0,1 | 0,1 | 0,1 | 0,1 |
| Schälfestigkeit/Schälwiderstand [N/cm] | 3,4 | 3,1 | 2,1 | 2,6 | 3,5 | 8,9 | 13,1 | 13,6 | 31 | 15,4 |

Das in den Zusammensetzungen 1 bis 7 eingesetzte erste Polyisobutylen ist stets identisch und entsprach dem besonders bevorzugten ersten Polyisobutylen wie weiter oben definiert. Das in den Zusammensetzungen 6 und 7 eingesetzte dritte Polyisobutylen entsprach den besonders bevorzugten dritten Polyisobutylen wie weiter oben beschrieben. Der nur in den Vergleichszusammensetzungen 1 bis 5 eingesetzte dritte Butylkautschuk wies ein mittleres Molekulargewicht $M_w$ zwischen 250.000 und 550.000 auf. Das in der Zusammensetzung 6 eingesetzte zweite Polyisobutylen entsprach einem solchen, wie weiter oben als besonders bevorzugt definiert. Der in der erfindungsgemäßen Zusammensetzung 7 eingesetzte zweite, vorvernetzte Butylkautschuk entsprach dem weiter oben in der Beschreibung als besonders bevorzugt definierten zweiten, teilweise vernetzten Butylkautschuk. Der in den erfindungsgemäßen Zusammensetzungen 8 und 9 eingesetzte erste, depolymerisierte Butylkautschuk entsprach dem weiter oben in der Beschreibung als besonders bevorzugten definierten ersten depolymerisierten Butylkautschuk. Als pulverförmiges, mineralisches Füllmaterial wurde ein Talkum eingesetzt, dass ein natürliches Gemenge aus Magnesium Silicat-Hydrat und Magnesium-Aluminium-Silicat-Hydrat mit ausgeprägter Plättchen-Struktur darstellt. Als faserförmiges mineralisches Füllmaterial wurde ein Wollastonit mit ausgeprägter Nadelstruktur eingesetzt. Als Stabilisationsmittel wurde Stearinsäure eingesetzt, das eingesetzte Antioxidationsmittel entsprach üblichen marktgängigen Antioxidationsmitteln.

Die mittlere relative Molmasse $\overline{M}_v$ (Viskositätsmittel) betrug in den Zusammensetzungen

- 1 bis 7 und 10 für das eingesetzte erste Polyisobutylen 42.000 g/mol;
- 6, 8 und 9 für das eingesetzte zweite Polyisobutylen 2.600.000 g/mol; und
- 6 bis 10 für das eingesetzte dritte Polyisobutylen 390.000 g/mol.

Für den in den Zusammensetzungen 8 und 9 eingesetzten ersten Butylkautschuk betrug das mittlere Molekulargewicht $M_w$ 36.000, die Viskosität nach Brookfield bei 66°C gemäß DIN EN ISO 2555 : 2000-01 1.000.000 mPa·s und der Grad der Unsättigung 3,0 Mol-%.

Für den in den Zusammensetzungen 7 und 10 eingesetzten zweiten Butylkautschuk lag die Mooney-Viskosität ML(1+3) bei 127°C in einem Bereich von 80 MU bis 90 MU gemäß ISO 289 : 2005 und der Grad der Unsättigung bei weniger als 1,0 Mol-%.

Für den in den Zusammensetzungen 1 bis 5 eingesetzten dritten Butylkautschuk lag die Mooney-Viskosität ML(1+8) bei 125°C in einem Bereich von 45 MU bis 50 MU gemäß ISO 289 : 2005 und der Grad der Unsättigung bei 1,5 Mol-%.

Die Korrosionsschutzzusammensetzungen 1 bis 9 gemäß obiger Tabelle wurden hergestellt in Form eines dreilagigen Bandes mit einer Lage aus den genannten Zusammensetzungen auf einer Trägerfolie aus Polyethylen, die auf der der Zusammensetzung zugewandten Seite eine Haftvermittlungsschicht aufwies. Mit diesem dreilagigen Band wurde ein Stahlrohr bei Raumtemperatur bei 23°C nicht überlappend umwickelt. Dabei ergaben sich bei der Bestimmung der Schälfestigkeit/des Schälwiderstandes die in der obigen Tabelle angegebenen Werte. Hierbei wird deutlich, das die erfindungsgemäßen Zusammensetzungen 7 bis 9 deutlich höhere Werte für den Schälwiderstand/die Schälfestigkeit aufweisen als die nicht erfindungsgemäßen Zusammensetzungen 1 bis 6. Die Zusammensetzungen 7 bis 9 ergaben auch sehr gute kohäsive Trennbilder bei einer sehr guten Benetzung des Stahls.

Die durchgeführten Versuche zeigen, dass mit der erfindungsgemäßen Korrosionsschutzzusammensetzung vorteilhafte Werte in Hinblick auf die Schälfestigkeit/den Schälwiderstand, bestimmt gemäß DIN 12068 in der Version 1999-03, erzielbar sind, und auch sehr gute kohäsive Trennbilder erzeugbar sind. Auch erfolgt eine gute Benetzung des Untergrundes, insbesondere eines Stahlrohres. Es wurden keine Voranstrichmittel bzw. Primer oder Haftvermittler eingesetzt. Diese sind auch nicht notwendigerweise einzusetzen, um die Norm gemäß DIN EN 12068 in der Version 1999-03 zu erfüllen.

Der erfindungsgemäß mögliche Verzicht auf Voranstrichmittel bzw. Primer oder Haftvermittler hat den Vorteil, dass weniger Aufwand beim Aufbringen der Korrosionsschutzzusammensetzung betrieben werden muss. Vorteilhaft ist ebenfalls, dass ohne Verwendung von Voranstrichmittel bzw. Primer oder Haftvermittler, insbesondere solchen, die Benzin als Lösungsmittel enthalten, der Umweltschutz verbessert wird. Darüber hinaus wird der Transport der Korrosionsschutzzusammensetzung vereinfacht, weil Voranstrichmittel bzw. Primer oder Haftvermittler hierfür, die Benzin als Lösungsmittel enthalten, aus Sicherheitsgründen nicht ohne weiteres in Luftfahrzeugen transportiert werden dürfen.

Bevorzugt ist daher ist die Verwendung der erfindungsgemäßen Korrosionsschutzzusammensetzung zum Schutz von Rohren, Rohre umfassenden Anlagen, sonstigen Anlagen und/oder Einbauten vor Korrosion, bei der keine Voranstrichmittel bzw. Primer oder Haftvermittler, insbesondere keine solchen, die Benzin als Lösungsmittel enthalten, eingesetzt werden.

Ebenfalls bevorzugt ist ein Verfahren zur Erzielung eines Korrosionsschutzes auf Rohren, Rohre umfassenden Anlagen, sonstigen Anlagen und/oder Einbauten durch Aufbringung der erfindungsgemäßen Korrosionsschutzzusammensetzung, bei dem keine Voranstrichmittel bzw. Primer oder Haftvermittler, insbesondere keine solchen, die Benzin als Lösungsmittel enthalten, eingesetzt werden.

Mit der vorliegenden Erfindung wird eine Korrosionsschutzzusammensetzung zur Verfügung gestellt, welche sowohl in streichfähiger bzw. spachtelfähiger Form als auch in Form eines Bandes oder Schrumpfmanschette, in welcher Ausführung auch immer, eingesetzt werden kann und dabei sehr gute Hafteigenschaften aufweist und auf diese Weise einen langlebigen Korrosionsschutz den mit dieser versehenen Produkte, Anlagen, Einbauten, Rohre, Pipelines etc. vermittelt. Vorteilhafterweise kann diese, in welcher Form auch immer, ohne einen Primer/Haftvermittler eingesetzt werden.

## Patentansprüche

1. Korrosionsschutzzusammensetzung umfassend mindestens eine erste Verbindung ausgewählt aus einer Gruppe bestehend aus einem ersten Polyisobutylen mit einer mittleren relativen Molmasse $\overline{M}_v$ in einem Bereich von 27.000 g/mol bis 110.000 g/mol und einem Staudinger-Index $J_0$ in einem Bereich von 13,5 cm$^3$/g bis 77 cm$^3$/g und/oder einem ersten, depolymerisierten Butylkautschuk mit einer scheinbaren Viskosität nach Brookfield bei 66°C gemäß DIN EN ISO 2555 : 2000-01 in einem Bereich von 360.000 mPa · s bis 2.200.000 mPa · s und einem mittleren Molekulargewicht $M_w$ in einem Bereich von 18.000 bis 66.000, und mindestens eine zweite Verbindung, ausgewählt aus einer Gruppe bestehend aus einem zweiten Polyisobutylen mit einer mittleren relativen Molmasse $\overline{M}_v$ in einem Bereich von 810.000 g/mol bis 7.150.000 g/mol und einen Staudinger-Index $J_0$ in einem Bereich von 216 cm$^3$/g bis 990 cm$^3$/g und/oder einem zweiten, teilweise vernetzten Butylkautschuk mit einer Mooney-Viskosität ML(1+3) bei 127°C in einem Bereich von 58,5 MU bis 110 MU gemäß ISO 289 : 2005, wobei die Korrosionsschutzzusammensetzung mindestens ein erstes oder mindestens ein zweites Polyisobutylen als auch mindestens einen ersten oder mindestens einen zweiten Butylkautschuk umfasst, wobei der Staudinger-Index $J_0$ wie in der Beschreibung angegebenen bestimmt ist.

2. Zusammensetzung gemäß Anspruch 1, **dadurch gekennzeichnet, dass** die erste Verbindung in einer Menge in einem Bereich von 18 Gew.-% bis 72,6 Gew.-%, bezogen auf die Gesamtmenge der Zusammensetzung, von der Zusammensetzung umfasst ist.

3. Zusammensetzung gemäß einem oder mehreren der vorhergehenden Ansprüche, **dadurch gekennzeichnet, dass** die zweite Verbindung in einer Menge in einem Bereich von 0,9 Gew.-% bis 22 Gew.-%, bezogen auf die Gesamtmenge der Zusammensetzung, von der Zusammensetzung umfasst ist.

4. Zusammensetzung gemäß einem oder mehreren der vorhergehenden Ansprüche, **dadurch gekennzeichnet, dass** diese mindestens eine dritte Verbindung umfasst, ausgewählt aus einer Gruppe umfassend mindestens ein drittes Polyisobutylen mit einem Staudinger-Index $J_0$ in einem Bereich von 67,5 cm$^3$/g bis 258,5 cm$^3$/g und mit einer mittleren relativen Molmasse $\overline{M}_v$ in einem Bereich von 1 35.000 g/mol bis 935.000 g/mol und/oder mindestens einen dritten Butylkautschuk mit einem mittleren Molekulargewicht $M_w$ in einem Bereich von 1 35.000 bis 2.200.000 und einer Mooney-Viskosität ML(1+8) bei 125°C in einem Bereich von 18 MU bis 68,2 MU, gemessen gemäß ISO 289 : 2005, wobei der Staudinger-Index $J_0$ wie in der Beschreibung angegebenen bestimmt ist.

5. Zusammensetzung gemäß Anspruch 4, **dadurch gekennzeichnet, dass** die mindestens eine dritte Verbindung in einer Menge in einem Bereich von 9 Gew.-% bis 44 Gew.-%, bezogen auf die Gesamtmenge der Zusammensetzung, von der Zusammensetzung umfasst ist.

6. Zusammensetzung gemäß einem oder mehreren der vorhergehenden Ansprüche, **dadurch gekennzeichnet, dass** diese weiterhin umfasst mindestens ein Füllmaterial, mindestens ein Antioxidationsmittel, mindestens ein Vernetzungsmittel, mindestens ein Elastomer und/oder mindestens ein Stabilisationsmittel.

7. Korrosionsschutzzusammensetzung gemäß Anspruch 6, **dadurch gekennzeichnet, dass** diese mindestens ein Füllmaterial in einer Menge in einem Bereich von 18 Gew.-% bis 77 Gew.-%, bezogen auf die Gesamtmenge der Zusammensetzung, umfasst.

8. Zusammensetzung gemäß einem oder mehreren der Ansprüche 6 oder 7, **dadurch gekennzeichnet, dass** das mindestens eine Füllmaterial pulverförmig oder faserförmig ist.

9. Zusammensetzung gemäß einem oder mehreren der Ansprüche 6 bis 8, **dadurch gekennzeichnet, dass** die Zusammensetzung ein erstes pulverförmiges Füllmaterial und ein zweites faserförmiges Füllmaterial umfasst.

10. Zusammensetzung gemäß einem oder mehreren der vorhergehenden Ansprüche, **dadurch gekennzeichnet, dass** diese in Bandform oder Mattenform vorliegt.

11. Zusammensetzung gemäß Anspruch 10, **dadurch gekennzeichnet, dass** das Band zweilagig oder mehrlagig aufgebaut ist, wobei mindestens eine Lage die Zusammensetzung umfasst.

12. Verwendung einer Korrosionsschutzzusammensetzung gemäß einem oder mehreren der Ansprüche 1 bis 11 zum Schutz von Rohren und Rohre umfassenden Anlagen sowie sonstigen Anlagen und Einbauten vor Korrosion.

13. Verfahren zur Erzielung eines Korrosionsschutzes auf Rohren und Rohre umfassenden Anlagen sowie sonstigen Anlagen und Einbauten durch Aufbringung der Zusammensetzung gemäß einem oder mehren der Ansprüche 1 bis 11.

14. Verfahren gemäß dem Anspruch 13, **dadurch gekennzeichnet, dass** Rohre bzw. Rohre umfassende Anlagen mit einem mindestens einschichtigen Band, umfassend die Zusammensetzung, umwickelt werden.

15. Mindestens einlagiges Wickelband, umfassend die Zusammensetzung gemäß einem oder mehreren der Ansprüche 1 bis 11.

**Claims**

1. Anti-corrosion composition comprising at least a first compound selected from a group consisting of a first polyisobutylene having an average relative molar mass $\overline{M}_v$ ranging from 27,000 g/mole to 110,000 g/mole and a Staudinger index $J_0$ ranging from 13,5 cm$^3$/g to 77 cm$^3$/g and/or a first depolymerized butyl rubber with an apparent Brookfield viscosity at 66°C according to DIN EN ISO 2555 : 2000-01 ranging from 360,000 mPa · s to 2,200,000 mPa · s and an average molecular weight $M_w$ ranging from 18,000 to 66,000, and at least a second compound, selected from a group consisting of a second polyisobutylene having an average relative molar mass $\overline{M}_v$ ranging from 810,000 g/mole to 7,150,000 g/mole and a Staudinger index $J_0$ ranging from 216 cm$^3$/g to 990 cm$^3$/g and/or one second partly cross-linked butyl rubber with a Mooney viscosity ML(1+3) at 127°C ranging from 58,5 MU to 110 MU according to ISO 289 : 2005, wherein the anti-corrosion composition comprises at least one first or at least one second polyisobutylene as well as at least one first or at least one second butyl rubber.

2. Composition according to claim 1, **characterized in that** the first compound is comprised by the composition in a quantity ranging from 18% by weight to 72,6% by weight, based on the total quantity of composition.

3. Composition according to one or more of the preceding claims, **characterized in that** the second compound is comprised by the composition in a quantity ranging from 0,9% by weight to 22% by weight, based on the total quantity of the composition.

4. Composition according to one or more of the preceding claims, **characterized in that** it comprises at least a third compound, selected from a group comprising at least a third polyisobutylene with a Staudinger index $J_0$ ranging from 67,5 cm$^3$/g to 258,5 cm3/g and an average relative molar mass $\overline{M}_v$ ranging from 135,000 g/mole to 935,000 g/mole and/or at least a third butyl rubber with an average molecular weight $M_w$ ranging from 135,000 to 2,200,000 and a Money viscosity ML(1+8) at 125°C ranging from 18 MU to 68,2 MU, measured according to ISO 289 : 2005.

5. Composition according to claim 4, **characterized in that** the at least one third compound is comprised by the composition in a quantity ranging from 9% by weight to 44% by weight, based on the total quantity of the composition.

6. Composition according to one or more of the preceding claims, **characterized in that** it furthermore comprises at least one filler material, at least one antioxidant, at least one cross-linking agent, at least an elastomer and/or at least one stabilizer.

7. Anti-corrosion composition according to claim 6, **characterized in that** it comprises at least one filler material in a quantity ranging from 18% by weight to 77% by weight, based on the total quantity of the composition.

8. Composition according to one or more of the claims 6 or 7, **characterized in that** the at least one filler material is powdery or fibrous.

9. Composition according to one or more of the claims 6 to 8, **characterized in that** the composition comprises one first powdery filler material and one second fibrous filler material.

10. Composition according to one or more of the preceding claims, **characterized in that** it is provided in tape format or pad format.

11. Composition according to claim 10, **characterized in that** the tape has a two or multilayered structure, wherein at least one layer comprises the composition.

12. Use of an anti-corrosion composition according to one or more of the claims 1 to 11 to protect pipes and systems comprising pipes as well as other plants and installations from corrosion.

13. Method to achieve corrosion protection on pipes and systems comprising pipes as well as other plants and installations by applying the composition according to one or more of the claims 1 to 11.

14. Method according to claim 13, **characterized in that** pipes respectively systems comprising pipes are wrapped with an at least single-layered tape comprising the composition.

15. An at least single-layered wrapping tape comprising the composition according to one or more of the claims 1 to 11.

**Revendications**

1. Composition anticorrosion comprenant au moins un premier composé choisi dans le groupe constitué d'un premier polyisobutylène ayant une masse molaire relative moyenne $\overline{M}_v$ dans une plage de 27 000 g/mol à 110 000 g/mol et un indice de Staudinger $J_0$ dans une plage de 13,5 cm$^3$/g à 77 cm$^3$/g et/ou un premier caoutchouc butyle dépolymérisé ayant une viscosité apparente selon Brookfield à 66°C conformément à DIN EN ISO 2555 : 2000-01 dans une plage de 360 000 mPa.s à 2 200 000 mPa.s et une masse moléculaire moyenne $M_w$ dans une plage de 18 000 à 66 000, et au moins un deuxième composé choisi dans un groupe constitué d'un deuxième polyisobutylène ayant une masse molaire relative moyenne $M_v$ dans une plage de 810 000 g/mol à 7 150 000 g/mol et un indice de Staudinger $J_0$ dans une plage de 216 cm$^3$/g à 990 cm$^3$/g et/ou un second caoutchouc butyle partiellement réticulé ayant une viscosité Mooney ML(1+3) à 127°C dans une plage de 58,5 MU à 110 MU selon ISO 289 : 2005, ladite composition anticorrosion comprenant au moins un premier ou au moins un deuxième polyisobutylène ainsi qu'au moins un premier ou au moins un deuxième caoutchouc butyle, l'indice de Staudinger $J_0$ étant déterminé comme indiqué dans la description.

2. Composition selon la revendication 1, **caractérisée en ce que** ledit premier composé est compris dans ladite composition dans une quantité dans une plage de 18 % à 72,6 % en poids, par rapport à la quantité totale de ladite composition.

3. Composition selon une ou plusieurs des revendications précédentes, **caractérisée en ce que** ledit second composé est compris dans ladite composition dans une quantité dans une plage de 0,9 % à 22 % en poids, par rapport à la quantité totale de ladite composition.

4. Composition selon l'une ou plusieurs des revendications précédentes, **caractérisée en ce qu'**elle comprend au moins un troisième composé compris dans un groupe comprenant au moins un troisième polyisobutylène ayant un indice de Staudinger $J_0$ compris dans une plage de 67,5 cm$^3$/g à 258,5 cm$^3$/g et ayant une masse molaire relative moyenne $\overline{M}_v$ comprise dans une plage de 135. 000 g/mol à 935 000 g/mol et/ou au moins un troisième caoutchouc butyle ayant un poids moléculaire moyen $M_w$ dans une plage de 135 000 à 2 200 000 et une viscosité Mooney ML(1+8) à 125°C dans une plage de 18 MU à 68,2 MU, mesurée selon ISO 289 : 2005, l'indice de Staudinger $J_0$ étant déterminé comme indiqué dans la description.

5. Composition selon la revendication 4, **caractérisée en ce que** ledit au moins un troisième composé est compris dans ladite composition dans une quantité dans une plage de 9 % à 44 % en poids, par rapport à la quantité totale de ladite composition.

6. Composition selon l'une ou plusieurs des revendications précédentes, **caractérisée en ce qu'**elle comprend en outre au moins un matériau de remplissage, au moins un antioxydant, au moins un agent de réticulation, au moins un élastomère et/ou au moins un agent stabilisant.

7. Composition anticorrosion selon la revendication 6, **caractérisée en ce qu'**elle comprend au moins un matériau de remplissage en une quantité comprise dans une plage de 18 % à 77 % en poids, par rapport à la quantité totale de ladite composition.

8. Composition selon une ou plusieurs des revendications 6 à 7, **caractérisée en ce que** ledit au moins un matériau de remplissage est sous forme de poudre ou sous forme de fibres.

9. Composition selon une ou plusieurs des revendications 6 à 8, **caractérisée en ce que** ladite composition comprend un premier matériau de remplissage sous forme de poudre et un deuxième matériau de remplissage sous forme de fibres.

10. Composition selon l'une ou plusieurs des revendications précédentes, **caractérisée en ce qu'**elle se présente sous forme de bande ou sous forme de matelas.

11. Composition selon la revendication 10, **caractérisée en ce que** la bande est constituée de deux couches ou de plusieurs couches, au moins une couche comprenant la composition.

12. Utilisation d'une composition anticorrosion selon une ou plusieurs des revendications 1 à 11 la protection des tuyaux et des installations comprenant des tuyaux, ainsi que d'autres installations et constructions, contre la corrosion.

13. Procédé pour obtenir une protection contre la corrosion sur des tuyaux et installations comportant des tuyaux ainsi que d'autres installations et constructions, par application de la composition selon l'une ou plusieurs des revendications 1 à 11.

14. Procédé selon la revendication 13, **caractérisé en ce que** des tuyaux ou installations comportant des tuyaux sont enroulés avec au moins une bande monocouche, comportant la composition.

15. Bande d'enroulement au moins monocouche, comportant la composition selon l'une ou plusieurs des revendications 1 à 11.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0421607 A1
- EP 2210734 A2